(19) Europäisches Patentamt / European Patent Office / Office européen des brevets

(11) **EP 3 451 152 B1**

(12) **EUROPEAN PATENT SPECIFICATION**

(45) Date of publication and mention of the grant of the patent:
**30.09.2020 Bulletin 2020/40**

(51) Int Cl.:
***G06F 7/544*** *(2006.01)*   ***G06F 7/48*** *(2006.01)*

(21) Application number: **16899846.6**

(22) Date of filing: **29.04.2016**

(86) International application number:
**PCT/CN2016/080690**

(87) International publication number:
**WO 2017/185334 (02.11.2017 Gazette 2017/44)**

(54) **DEVICE AND METHOD FOR PERFORMING MULTIPLE TRANSCENDENTAL FUNCTION OPERATIONS**

VORRICHTUNG UND VERFAHREN ZUR DURCHFÜHRUNG MEHRERER TRANSZENDENTALER FUNKTIONSOPERATIONEN

DISPOSITIF ET PROCÉDÉ PERMETTANT D'EFFECTUER DE MULTIPLES OPÉRATIONS DE FONCTION TRANSCENDANTE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**06.03.2019 Bulletin 2019/10**

(73) Proprietor: **Cambricon Technologies Corporation Limited**
**Beijing 100190 (CN)**

(72) Inventors:
• **ZHANG, Shijin**
  **Beijing 100190 (CN)**
• **LI, Shangying**
  **Beijing 100190 (CN)**
• **CHEN, Tianshi**
  **Beijing 100190 (CN)**
• **CHEN, Yunji**
  **Beijing 100190 (CN)**

(74) Representative: **AWA Sweden AB**
**P.O. Box 5117**
**200 71 Malmö (SE)**

(56) References cited:
CN-A- 101 630 243    CN-A- 102 722 469
US-A1- 2004 015 882    US-A1- 2004 215 676

• **MEHER P K ET AL: "50 Years of CORDIC: Algorithms, Architectures, and Applications", IEEE TRANSACTIONS ON CIRCUITS AND SYSTEMS I: REGULAR PAPERS, IEEE, US, vol. 56, no. 9, 1 September 2009 (2009-09-01), pages 1893-1907, XP011333527, ISSN: 1549-8328, DOI: 10.1109/TCSI.2009.2025803**
• **ANDRAKA R ED - ASSOCIATION FOR COMPUTING MACHINERY: "SURVEY OF CORDIC ALGORITHMS FOR FPGA BASED COMPUTERS", ACM/SIGDA INTERNATIONAL SYMPOSIUM ON FIELD PROGRAMMABLE GATE ARRAYS. FPGA '98. MONTEREY, CA, FEB. 22 - 24, 1998; [ACM/SIGDA INTERNATIONAL SYMPOSIUM ON FIELD PROGRAMMABLE GATE ARRAYS], NEW YORK, NY : ACM, US, vol. 6TH CONF, 22 February 1998 (1998-02-22), pages 191-200, XP000883995, DOI: 10.1145/275107.275139 ISBN: 978-0-89791-978-4**
• **B. LAKSHMI ET AL: "CORDIC Architectures: A Survey", VLSI DESIGN, vol. 2010, 31 March 2010 (2010-03-31), pages 1-19, XP055635943, US ISSN: 1065-514X, DOI: 10.1155/2010/794891**
• **Syahrulanuar Ngah ET AL: "TWO-STEPS IMPLEMENTATION OF SIGMOID FUNCTION FOR ARTIFICIAL NEURAL NETWORK IN FIELD PROGRAMMABLE GATE ARRAY", , 1 April 2016 (2016-04-01), XP055635940, Retrieved from the Internet: URL:http://www.arpnjournals.org/jeas/research_papers/rp_2016/jeas_0416_4041.pdf [retrieved on 2019-10-25]**

**EP 3 451 152 B1**

**Description**

**TECHNICAL FIELD**

The present invention relates to the technical field of transcendental function operation, specifically to an apparatus and a method for performing multiple transcendental function operations, and particularly to an apparatus and a method for performing trigonometric, hyperbolic, exponential or logarithmic function operations.

**BACKGROUND**

Transcendental functions such as trigonometric, hyperbolic, exponential, and logarithmic functions are often used not only in all kinds of scientific computing, but also as activation functions in multi-layer artificial neural networks. Multi-layer artificial neural networks are widely used in the fields of pattern recognition, image processing, function approximation, optimization computing, etc. and they have received wide attention from academia and industrial community in recent years because of their high recognition precision and good parallelism.

One known method that supports calculations of the above-mentioned kinds of transcendental functions is to use a general-purpose processor. This method approximates various transcendental functions by using general-purpose register files and general-purpose functional units to execute general instructions. One of the disadvantages of this method is that it cannot be integrated with dedicated devices of multi-layer artificial neural networks, and as a result, the other steps cannot get benefit from the performance enhancement of such devices. In addition, a general-purpose processor needs to decode transcendental function calculation into a long list of operations and memory access instruction sequences, and the front-end decoding of the processor brings about high overheads in power consumption.

Another method to calculate transcendental functions in multi-layered artificial neural networks is linear approximation. This method approximates activation functions (many of which are transcendental functions) by dividing the domain of definition into segments and storing the coefficients of the linear approximations for respective segments. The disadvantage of this method is that the number of the segments into which the domain of definition can be divided for piecewise linear approximation is limited, so the precision cannot meet the needs of the development of artificial neural networks, and the method cannot be used for applications requiring higher precision, such as scientific computing and image processing.

**SUMMARY**

In view of the foregoing, the major object of the present invention lies in providing an apparatus and a method for performing multiple transcendental function operations to solve the problems of excessive overheads in the general-purpose processor manner and poor precision in the pure linear approximation manner, so as to strengthen the support for various transcendental function operations.

In order to achieve the above object, the present invention provides an apparatus for performing multiple transcendental function operations, the apparatus comprising a pre-processing unit group, a core unit and a post-processing unit group, wherein:

the pre-processing unit group is configured to transform an externally input independent variable a into x, y coordinates, an angle z, and other information k, and determine an operation mode to be used by the core unit;

the core unit is configured to perform trigonometric or hyperbolic transformation on the x, y coordinates and the angle z, obtain transformed x', y' coordinates and angle z', and output them to the post-processing unit group; and

the post-processing unit group is configured to transform the x', y' coordinates and the angle z' input by the core unit according to the other information k and a function f input by the pre-processing unit group to obtain an output result c.

In the above solution, the pre-processing unit group comprises a selector 1 and a processor 2, and the post-processing unit group comprises a first post-processing unit 4, a second post-processing unit 5 and a third post-processing unit 6, wherein the selector 1 receives the externally input independent variables a and the externally input function f, and determines which one of the following four different operations should to be taken, the details being set out as follows:

I. if, under the specification adopted for input or output, the error between the result of the linear or quadratic approximation of the independent variable a and the true value thereof is limited to the last bit of mantissa in a case the result and the true value are respectively represented by floating-point numbers, resulting in that the independent

2

variable a is too small, then the selector 1 directly outputs the independent variable a and the function f to the first post-processing unit 4 in the post-processing unit group, and the first post-processing unit 4 obtains a linear approximation formula of the independent variable a based on the function f, and performs addition and multiplication on the independent variable a to get the output result c;

II. if the independent variable a is not beyond the convergence domain of the core unit; it is possible to reach the angle z = 0 in a default mode or the ordinate y = 0 in a vector mode within a limited number of steps; and the independent variable a can be directly accepted by a corresponding mode of the core unit 3, then the selector 1 obtains the x, y coordinates and the angle z of the independent variable a, and the mode to be used by the core unit according to the function f, and outputs the x, y, z, and the mode to the core unit 3; the core unit 3 performs trigonometric or hyperbolic transformation on the x, y, and z based on the mode, obtains transformed x', y' coordinates and an transformed angle z', and outputs them to the second post-processing unit 5 in the post-processing unit group; and the second post-processing unit 5 obtains the output result c based on the x', y' coordinates and the angle z' output by the core unit and the function f;

III. if the independent variable a cannot be directly accepted by a corresponding mode of the core unit 3, then the selector 1 hands over the independent variable a and the function f to the processor 2 for pre-processing, and the processor 2 performs information decomposition processing on the independent variable a according to the function f, and obtains the x, y coordinates, the angle z, the mode to be used by the core unit 3, and the other information k, wherein the x, y coordinates, the angle z, and the mode to be used by the core unit 3 are the same as those in II; the x, y coordinates, the angle z, and the mode to be used by the core unit 3 are output to the core unit 3; and the other information k and the function f are directly output to the third post-processing unit 6 in the post-processing unit group; the core unit 3 performs trigonometric or hyperbolic transformation on the x, y, and z based on the mode, obtains the x', y', and z', and outputs them to the third post-processing unit 6 in the post-processing unit group; and the third post-processing unit 6 obtains the output result c based on the x', y', and z' output by the core unit 3, the k given by the processor 2, and the function f; and

IV. if, under the specification adopted for input or output, the true value of the independent variable a exceeds the maximum range of the values represented by floating-point numbers, then the selector 1 directly outputs the independent variable a and the function f.

In the above solution, under the specification adopted for input or output in the IV, the true value of the independent variable a exceeds the maximum range of the values represented by floating-point numbers, as for IEEE754 half-precision floating-point number, the maximum range is the maximum absolute value of (1024+1023) or $1024 \times 2^{30-15} = 65504$.

In order to achieve the above object, the present invention further provides a method for performing multiple transcendental function operations, the method comprising:

Step 1: the selector receives the input independent variable a and the input function f, and determines which one of the four different operations, namely, Type I, Type II, Type III, and Type IV should be adopted;

Step 2: when the processor adopts the Type III operation, the processor performs multiplication or shift transformation on the input independent variable a and the input function f so that they can be accepted by the core unit, and records transformation information k and a sign for use by the third post-processing unit, wherein the sign is valid only in a part of functions;

Step 3: when the processor adopts the Type II or Type III operation, the core unit implements the following four types of trigonometric or hyperbolic transformation by addition, subtraction, and shift operations on three numbers, i.e., the abscissa x, the ordinate y, and the angle z:

Trigonometric default: $(x, y, z) \rightarrow (A(x\cos z - y\sin z), A(y\cos z + x\sin z), 0)$

Trigonometric vector: $(x, y, 0) \rightarrow (A\sqrt{x^2 + y^2}, 0, \arctan\frac{y}{x})$

Hyperbolic default: $(x, y, z) \rightarrow (B(x\cosh z + y\sinh z), B(y\cosh z + x\sinh z), 0)$

Hyperbolic vector: $(x, y, 0) \rightarrow (B\sqrt{x^2 - y^2}, 0, \operatorname{arctanh}\frac{y}{x})$

wherein in the above formulae, A and B are constants related to the selected number of iterations, and the shift operation is to multiply by a power of 2;

Step 4a: when the processor adopts the Type I operation, the first post-processing unit calculates a linear or quadratic approximation according to the input function f and outputs the approximation; and

Step 4b: when the processor adopts the Type II or Type III operation, the second post-processing unit performs addition, subtraction, multiplying by a constant, division, and shift operations on the output of the core unit according to the input function f and the information provided by the processor of the pre-processing unit group, and obtains the output result c, wherein the information provided by the processor of the pre-processing unit group is valid only in the Type III operation.

As can be seen from the above technical solutions, the apparatus and the method for performing multiple transcendental function operations provided by the present invention coverts evaluation of transcendental functions into getting the results of trigonometric or hyperbolic rotation transformation; adopts the manner of iteration to ensure a fixed absolute value of the angle of each rotation; performs backward rotation when the rotation is excessive and performs forward rotation when the rotation is insufficient, so that it is only necessary to store a series of fixed coefficients and define an angle sequence $z_i$ to make $\tan z_i$ ($\tanh_i$ in the case of hyperbolic transformation) a power of 2, so that the multiplication of them by the x, y coordinates can be implemented by much simpler shifting. Accordingly, it reduces waste of time or power consumption caused by multiplication performed between each two of variables, and guarantees the required precision, and thus it can carry out calculations of various trigonometric, hyperbolic, exponential, and logarithmic functions, solves the problems of excessive overheads in the general-purpose processor manner and poor precision in the pure linear approximation manner, and efficiently strengthens the support for various transcendental function operations.

## BRIEF DESCRIPTION OF THE DRAWINGS

For a more complete understanding of the present invention and its advantages, reference will now be made to the following description with the drawings, in which:

FIG. 1 shows a schematic diagram of the structure of the apparatus for performing multiple transcendental function operations according to an embodiment of the present invention.

FIG. 2 shows a schematic diagram illustrating that the core unit in FIG. 1 iteratively approximates the target trigonometric function relation in the trigonometric mode.

FIG. 3 shows a schematic diagram illustrating that the core unit in FIG. 1 iteratively approximates the target hyperbolic function relation in the hyperbolic mode.

FIG. 4 shows a flowchart of the method for performing multiple transcendental function operations according to an embodiment of the present invention.

Table 1 shows the specific operations conducted by each unit under the conditions of respective input functions f and independent variables a according to the embodiments (using 16-bit floating-point numbers) of the present invention. These operations can be implemented mainly by addition, subtraction, multiplying a constant, and shift (multiplying or dividing by a power of 2), and only a few of them are implemented by division and multiplication requiring low precision (in the case of quadratic approximation). If the precision required by input and that required by output are different, some of the ranges in Table 1 should be adjusted accordingly.

## DETAILED DESCRIPTION

The other aspects, advantages, and prominent features of the present invention will become apparent to those skilled in the art in view of the following detailed description, combine with the drawings, of exemplary embodiments of the present invention.

In the present invention, the terms "comprise" and "contain" and derivatives thereof are intended to be inclusive but not limiting; the term "or" is inclusive, meaning and/or.

In the present specification, the following embodiments for describing the principles of the present invention are merely illustrative and should not be construed in any way as limiting the scope of the invention. The following description with reference to the drawings is provided to assist in a comprehensive understanding of the exemplary embodiments of the present invention as defined by the claims and their equivalents. The following description includes various specific details to assist in that understanding but these details should be regarded as merely exemplary. Therefore, those of ordinary skill in the art should realize that various changes and modifications of the embodiments described herein can be made without departing from the scope and spirit of the present invention. In addition, description of well-known functions and structures is omitted for clarity and conciseness. Moreover, the same reference numerals are used for similar functions and operations throughout the drawings.

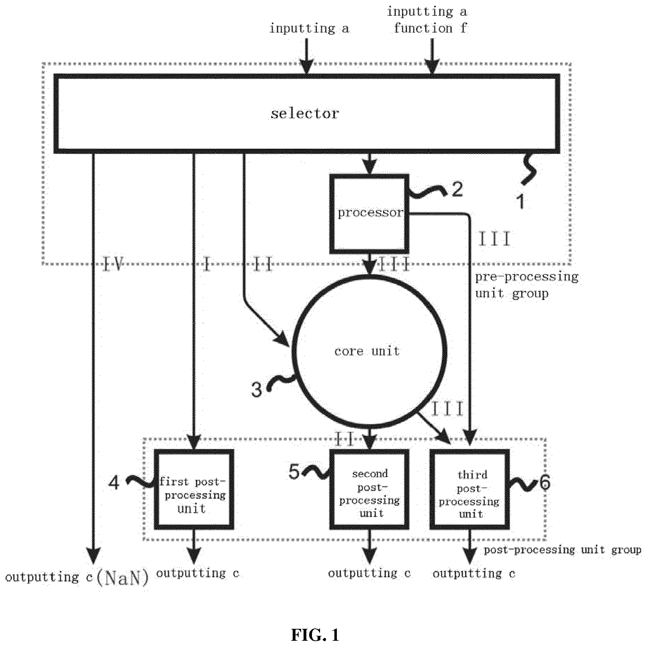

FIG. 1 shows a schematic diagram of the structure of the apparatus for performing multiple transcendental function operations according to an embodiment of the present invention. As shown in FIG. 1, the apparatus comprises a pre-processing unit group (1 and 2), a core unit 3 and a post-processing unit group (4, 5 and 6), wherein:

the pre-processing unit group is configured to transform an externally input independent variable a into x, y coordinates, an angle z, and other information k, and determine an operation mode to be used by the core unit;

the core unit 3 is configured to perform trigonometric or hyperbolic transformation on the x, y coordinates and the angle z, obtain transformed x', y' coordinates and angle z', and output them to the post-processing unit group; and

the post-processing unit group is configured to transform the x', y' coordinates and the angle z' input by the core unit according to the other information k and a function f input by the pre-processing unit group to obtain an output result c.

Wherein, the pre-processing unit group comprises a selector 1 and a processor 2, and the post-processing unit group comprises a first post-processing unit 4, a second post-processing unit 5 and a third post-processing unit 6, both of which can be implemented through hardware integrated circuit (such as application-specific integrated circuit, namely, ASIC). The selector 1 receives the externally input independent variables a and the externally input function f, and determines which one of the following four different operations should to be taken, the details being set out as follows:

I. if, under the specification adopted for input or output, the error between the result of the linear or quadratic approximation of the independent variable a and the true value thereof is limited to the last bit of mantissa in a case that the result and the true value are respectively represented by floating-point numbers, resulting in that the independent variable a is too small, then the selector 1 directly outputs the independent variable a and the function f to the first post-processing unit 4 in the post-processing unit group, and the first post-processing unit 4 obtains a linear approximation formula of the independent variable a based on the function f, and performs addition and multiplication on the independent variable a to get the output result c (for the details, please see Table 1);

II. if the independent variable a is not beyond the convergence domain of the core unit; it is possible to reach the angle z = 0 in a default mode or the ordinate y = 0 in a vector mode within a limited number of steps; and the independent variable a can be directly accepted by a corresponding mode of the core unit 3, then the selector 1 obtains the x, y coordinates and the angle z of the independent variable a, and the mode to be used by the core unit according to the function f, and outputs the x, y, z, and the mode to the core unit 3; the core unit 3 performs trigonometric or hyperbolic transformation on the x, y, and z based on the mode, obtains transformed x', y' coordinates and an transformed angle z', and outputs them to the second post-processing unit 5 in the post-processing unit group; and the second post-processing unit 5 obtains the output result c based on the x', y' coordinates and the angle z' output by the core unit and the function f;

III. if the independent variable a cannot be directly accepted by a corresponding mode of the core unit, then the selector 1 hands over the independent variable a and the function f to the processor 2 for pre-processing, and the processor 2 performs information decomposition processing on the independent variable a according to the function f, and obtains the x, y coordinates, the angle z, the mode to be used by the core unit 3, and the other information k, wherein the x, y coordinates, the angle z, and the mode to be used by the core unit 3 are the same as those in II; the x, y coordinates, the angle z, and the mode to be used by the core unit 3 are output to the core unit 3; and the other information k and the function f are directly output to the third post-processing unit 6 in the post-processing unit group; the core unit 3 performs trigonometric or hyperbolic transformation on the x, y, and z based on the mode, obtains the x', y', and z', and outputs them to the third post-processing unit 6 in the post-processing unit group; and the third post-processing unit 6 obtains the output result c based on the x', y', and z' output by the core unit 3, the k given by the processor 2, and the function f; and

IV. if, under the specification adopted for input or output, the true value of the independent variable a exceeds the maximum range of the values represented by floating-point numbers, for example, as for IEEE754 half-precision floating-point number, the maximum range is the maximum absolute value of (1024+1023) or $1024 \times 2^{30-15} = 65504$, then the selector 1 directly outputs the independent variable a and the function f (NaN). See Table 1 for the specific ranges for determination under the situations I, II, III and IV and the operations adopted in the four situations when respective input functions are operated by using IEEE754 half-precision (binary 16) floating-point numbers.

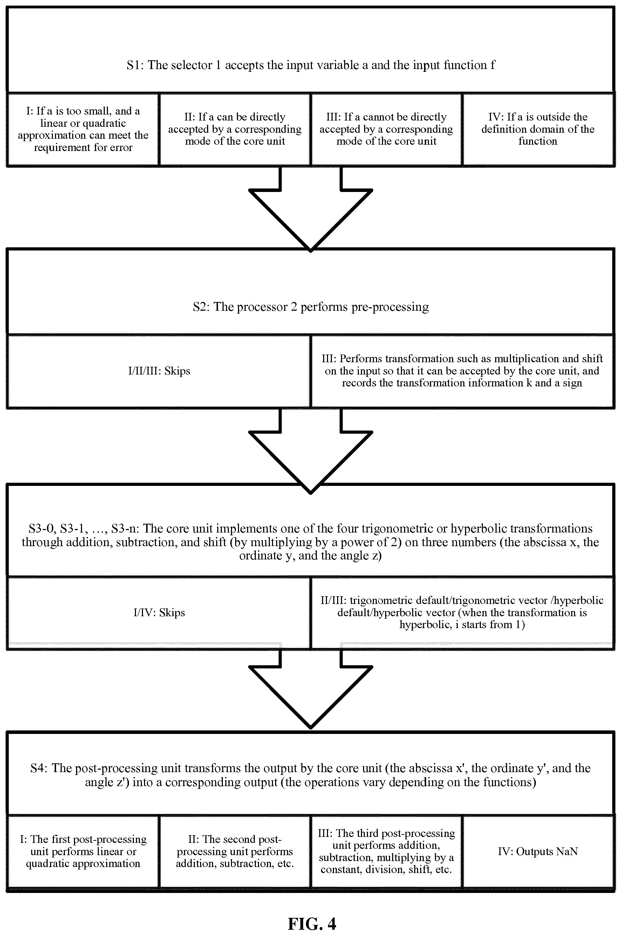

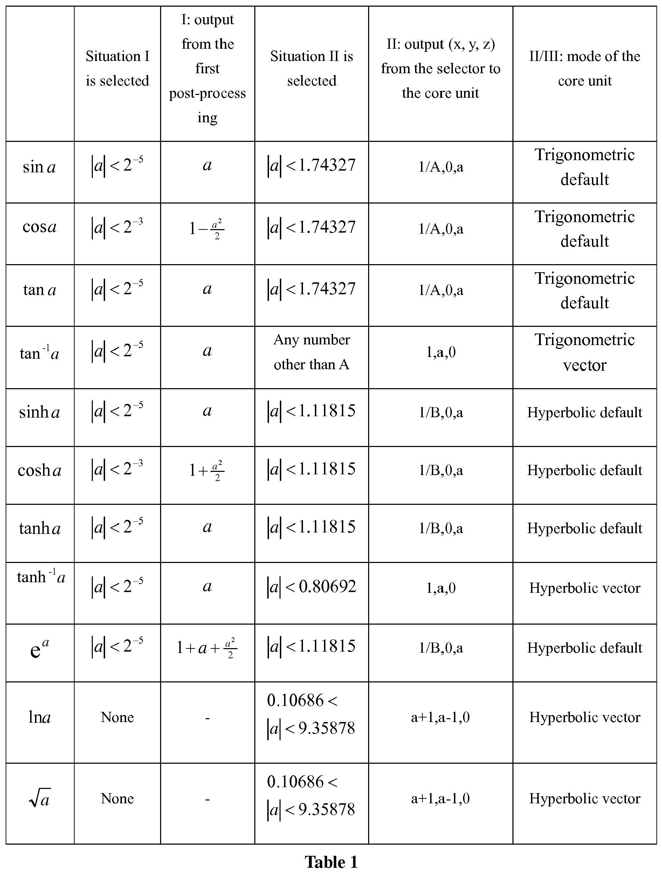

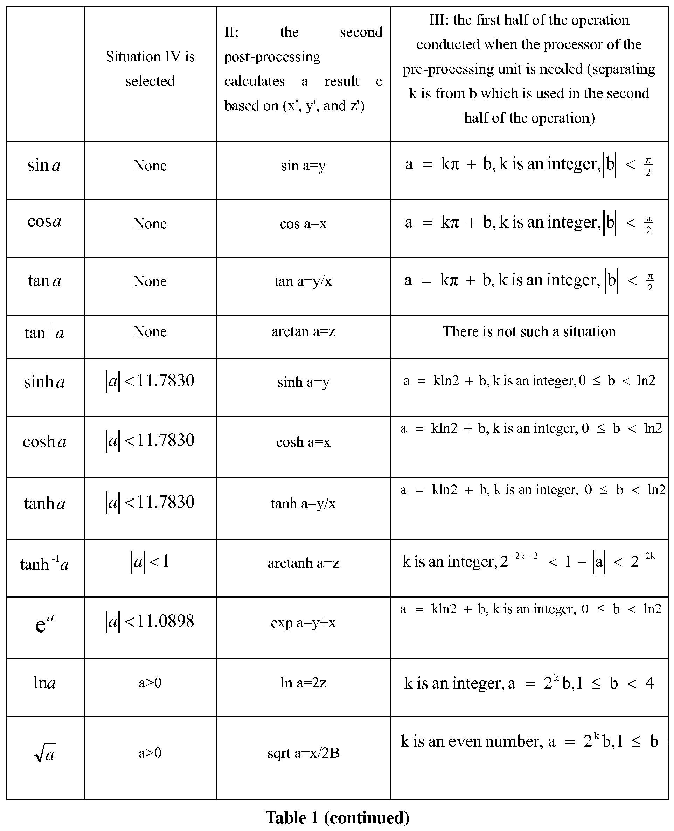

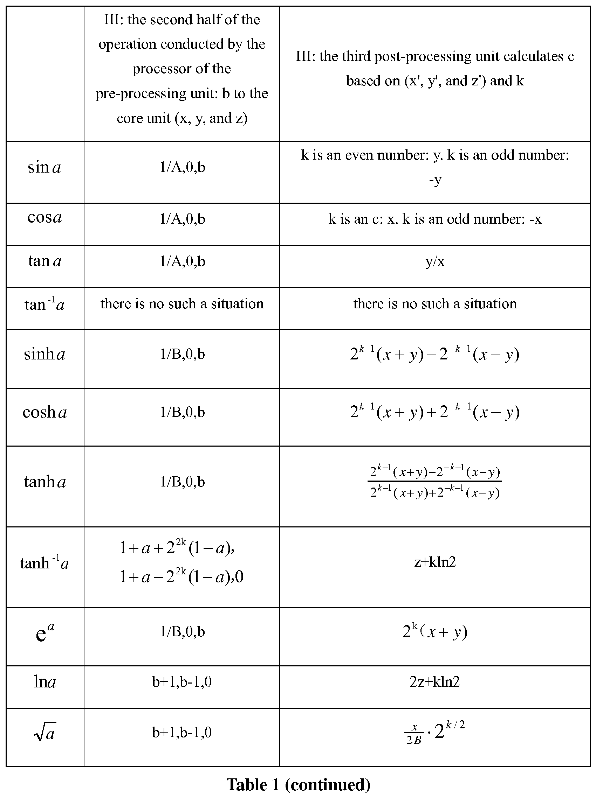

The embodiments of the present invention also provide a method for performing multiple transcendental function operations as shown in FIG. 4 (FIG. 4 shows a flowchart of the method for performing multiple transcendental function operations according to an embodiment of the present invention), comprising the following steps:

Step 1: the selector receives the input independent variable a and the input function f, and determines which one of the four different operations, namely, Type I, Type II, Type III, and Type IV should be adopted;

I. if, under the specification adopted for input or output, the error between the result of the linear or quadratic approximation of the independent variable a and the true value thereof is limited to the last bit of mantissa in a case that the result and the true value are respectively represented by floating-point numbers, resulting in that the independent variable a is too small, then the selector directly outputs the independent variable a and the function f to the first post-processing unit in the post-processing unit group, and the first post-processing unit obtains a linear approximation formula of the independent variable a based on the function f, and performs addition and multiplication on the independent variable a to get the output result c (for the details, please see Table 1);

II. if the independent variable a is not beyond the convergence domain of the core unit; it is possible to reach the angle z = 0 in a default mode or the ordinate y = 0 in a vector mode within a limited number of steps; and the independent variable a can be directly accepted by a corresponding mode of the core unit, then the selector obtains the x, y coordinates and the angle z of the independent variable a, and the mode to be used by the core unit according to the function f, and outputs the x, y, z, and the mode to the core unit; the core unit performs trigonometric or hyperbolic transformation on the x, y, and z based on the mode, obtains transformed x', y' coordinates and an transformed angle z', and outputs them to the second post-processing unit in the post-processing unit group; and the second post-processing unit obtains the output result c based on the x', y' coordinates and the angle z' output by the core unit and the function f;

III. if the independent variable a cannot be directly accepted by a corresponding mode of the core unit, then the selector hands over the independent variable a and the function f to the processor for pre-processing, and the processor performs information decomposition processing on the independent variable a according to the function f, and obtains the x, y coordinates, the angle z, the mode to be used by the core unit, and the other information k, wherein the x, y coordinates, the angle z, and the mode to be used by the core unit are the same as those in II; the x, y coordinates, the angle z, and the mode to be used by the core unit are output to the core unit; and the other information k and the function f are directly output to the third post-processing unit in the post-processing unit group; the core unit performs trigonometric or hyperbolic transformation on the x, y, and z based on the mode, obtains the x', y', and z', and outputs them to the third post-processing unit in the post-processing unit group; and the third post-processing unit obtains the output result c based on the x', y', and z' output by the core unit, the k given by the processor, and the function f; and

IV. if, under the specification adopted for input or output, the true value of the independent variable a exceeds the maximum range of the values represented by floating-point numbers, for example, as for IEEE754 half-precision floating-point number, the maximum range is the maximum absolute value of (1024+1023) or $1024 \times 2^{30-15} = 65504$, then the selector directly outputs the independent variable a and the function f (NaN). See Table 1 for the specific ranges for determination under the situations I, II, III and IV and the operations adopted in the four situations when respective input functions are operated by using IEEE754 half-precision (binary 16) floating-point numbers.

Step 2: when the processor adopts the Type III operation, the processor performs multiplication or shift transformation on the input independent variable a and the input function f so that they can be accepted by the core unit, and records transformation information k and a sign for use by the third post-processing unit, wherein the sign is valid only in some functions (for the specific operations of the processor under the conditions of respective input functions, please see Table 1);

Step 3: when the processor adopts the Type II or Type III operation, the core unit implements the following four types of trigonometric or hyperbolic transformations by addition, subtraction, and shift operations on three numbers, i.e., the abscissa x, the ordinate y, and the angle z:

Trigonometric default: $(x,y,z) \rightarrow (A(x\cos z - y\sin z), A(y\cos z + x\sin z), 0)$

Trigonometric vector: $(x, y, 0) \rightarrow (A\sqrt{x^2 + y^2}, 0, \arctan\frac{y}{x})$

Hyperbolic default: $(x,y,z) \rightarrow (B(x\cosh z + y\sinh z), B(y\cosh z + x\sinh z), 0)$

Hyperbolic vector: $(x, y, 0) \rightarrow (B\sqrt{x^2 - y^2}, 0, \text{arctanh}\frac{y}{x})$

wherein in the above formulae, A and B are constants related to the selected number of iterations, and the shift operation is to multiply by a power of 2; and the transformation is carried out by iterating to approximate to the rotation angle which should be performed;

whether the rotation angle $z_i$ in a step i is forward or backward is determined as below: in the default mode, the target z = 0, so when z > 0, forward rotation is performed, and when z < 0, backward rotation is performed; in the vector mode, the target y = 0, so when y > 0, backward rotation is performed, and when y < 0, forward rotation is performed;

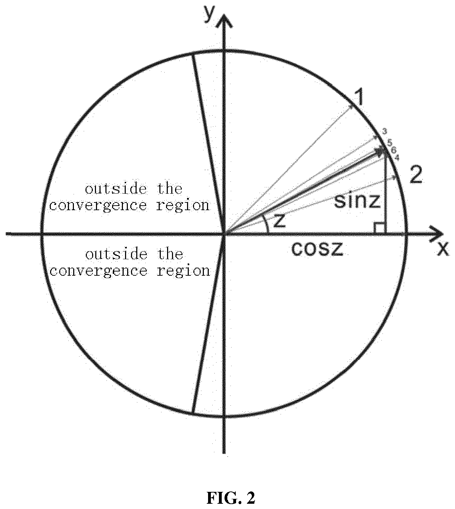

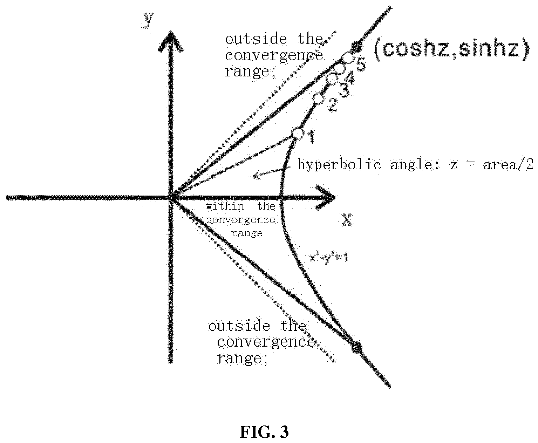

FIG. 2 shows intuitively the principle that a series of trigonometric transformation at fixed angles is used to approximate the target trigonometric transformation (for convenience, each step of enlarging the abscissa and the ordinate by $1/\cos z_i$ is not shown). FIG. 3 intuitively shows the principle that a series of hyperbolic transformation at fixed angles is used to approximate the target hyperbolic transformation (for convenience, each step of enlarging the abscissa and the ordinate by $1/\cosh z_i$ is not shown).

each iteration is equivalent to performing forward or backward rotation by the angle $z_i$ and enlarging the abscissa and the ordinate by $1/\cos z_i$, wherein in the hyperbolic mode, they are enlarged by $1/\cosh z_i$:

Trigonometric forward: $(x,y,z) \rightarrow ((x - y\tan z_i), (y+x\tan z_i), z - z_i)$
Trigonometric backward: $(x,y,z) \rightarrow ((x + y\tan z_i), (y - x\tan z_i), z + z_i)$
Hyperbolic forward: $(x,y,z) \rightarrow ((x + y\tanh z_i), (y + x\tanh z_i), z - z_i)$
Hyperbolic backward: $(x,y,z) \rightarrow ((x - y\tanh z_i), (y - x\tanh z_i), z + z_i)$

wherein in order to implement each iteration and convergence by using addition, subtraction and shift only, the following sequences should be adopted for $z_i$:

Trigonometric: $z_i = \arctan 2^{-i}, i = 0,1,2,...$

Hyperbolic: $z_i = \text{arctanh} 2^{-j}, j = i-k, \frac{1}{\Box}(3^{k+1}-1)/2 + k \leq i \leq (3^{k+2}-1)/2 + k + 1, i = 1,2,3, ...$

wherein the specific number of iterations, i.e., the maximum value of i, is flexibly selected based on the precision of the processed floating point number, and after the maximum number of iterations is selected, the aforementioned constants can be calculated: $A = \prod_{i=0}^{max} \frac{1}{\cos z_i}, B = \prod_{i=1}^{max} \frac{1}{\cosh z_i}$. For a selection from the above four modes under the conditions of respective input functions, please see Table 1.

Step 4a: when the processor adopts the Type I operation, the first post-processing unit calculates a linear or quadratic approximation according to the input function f and outputs the approximation (for the specific operations conducted by the first post-processing unit under the conditions of respective input functions, please see Table 1); and

Step 4b: when the processor adopts the Type II or Type III operation, the second post-processing unit performs addition, subtraction, multiplying by a constant, division, and shift operations on the output of the core unit according to the input function f and the information provided by the processor of the pre-processing unit group, and obtains the output result c, wherein the information provided by the processor of the pre-processing unit group is valid only in the Type III operation (for the specific operation conducted by the second post-processing unit under the conditions of respective input functions, please see Table 1).

As known from the above description, the apparatus and the method for performing multiple transcendental function operations provided by the present invention coverts evaluation of transcendental functions into getting the results of trigonometric or hyperbolic rotation transformation; adopts the manner of iteration to ensure a fixed absolute value of the angle of each rotation; performs backward rotation when the rotation is excessive and performs forward rotation when the rotation is insufficient, so that it is only necessary to store a series of fixed coefficients and define an angle sequence $z_i$ to make $\tan z_i$ ($\tanh z_i$ in the case of hyperbolic transformation) a power of 2, so that the multiplication of them by the x, y coordinates can be implemented by much simpler shifting. Accordingly, it reduces waste of time or power consumption caused by multiplication performed between each two of variables, and guarantees the required precision, and thus it can carry out calculations of various trigonometric, hyperbolic, exponential, and logarithmic functions, solves the problems of excessive overheads in the general-purpose processor manner and poor precision in the pure linear approximation manner, and efficiently strengthens the support for various transcendental function operations.

The processes or methods depicted in the foregoing drawings may be implemented by the processing logic including hardware (e.g., circuit, dedicated logic, etc.), firmware, software (e.g., software embodied in a non-transitory computer-readable medium), or combinations thereof. Although the processes or methods are described above in certain orders, it should be understood that some of the described operations can be performed in a different order. In addition, certain operations may be performed in parallel rather than sequentially.

In the foregoing specification, each embodiment of the present invention is described with reference to the specific exemplary embodiment thereof. Obviously, various modifications to the embodiments may be made without departing from the broader spirit and scope of the invention as set forth in the appended claims. Accordingly, the specification and drawings should be regarded as being illustrative rather than restrictive.

**Claims**

1. An apparatus for performing multiple transcendental function operations, **characterized in that** the apparatus comprises a pre-processing unit group, a core unit and a post-processing unit group, wherein:

   the pre-processing unit group is configured to transform an externally input independent variable a into x, y coordinates, an angle z, and other information k, and determine an operation mode to be used by the core unit;
   the core unit is configured to perform trigonometric or hyperbolic transformation on the x, y coordinates and the angle z, obtain transformed x' , y' coordinates and angle z' , and output them to the post-processing unit group; and
   the post-processing unit group is configured to transform the x' , y' coordinates and the angle z' input by the core unit according to the other information k and a function f input by the pre-processing unit group to obtain an output result c.

2. The apparatus for performing multiple transcendental function operations according to Claim 1, **characterized in that** the pre-processing unit group comprises a selector (1) and a processor (2), and the post-processing unit group comprises a first post-processing unit (4), a second post-processing unit (5) and a third post-processing unit (6), wherein the selector (1) receives the externally input independent variables a and the externally input function f, and determines which of four different operations should to be taken.

3. The apparatus for performing multiple transcendental function operations according to Claim 2, wherein the four different operations are:

   I. if, under a specification adopted for input or output, an error between a result of the linear or quadratic approximation of the independent variable a and a true value thereof is limited to the last bit of mantissa in a case the result and the true value are respectively represented by floating-point numbers, resulting in that the independent variable a is too small, then the selector (1) directly outputs the independent variable a and the function f to the first post-processing unit (4) in the post-processing unit group, and the first post-processing unit (4) obtains a linear approximation formula of the independent variable a based on the function f, and performs addition and multiplication on the independent variable a to get the output result c;
   II. if the independent variable a is not beyond a convergence domain of the core unit (3); is able to reach the angle z = 0 in a default mode or an ordinate y = 0 in a vector mode within a limited number of steps; and the independent variable a can be directly accepted by a corresponding mode of the core unit (3), then the selector (1) obtains the x, y coordinates and the angle z of the independent variable a, and the mode to be used by the core unit (3) according to the function f, and outputs the x, y, z, and the mode to the core unit (3); the core unit (3) performs trigonometric or hyperbolic transformation on the x, y, and z based on the mode, obtains transformed x' , y' coordinates and an transformed angle z' , and outputs them to the second post-processing unit (5) in the post-processing unit group; and the second post-processing unit (5) obtains the output result c based on the x', y' coordinates and the angle z' output by the core unit (3) and the function f;

III. if the independent variable a cannot be directly accepted by a corresponding mode of the core unit (3), then the selector (1) hands over the independent variable a and the function f to the processor (2) for pre-processing, and the processor (2) performs information decomposition processing on the independent variable a according to the function f, and obtains the x, y coordinates, the angle z, the mode to be used by the core unit (3), and the other information k, wherein the x, y coordinates, the angle z, and the mode to be used by the core unit (3) are the same as those in II; the x, y coordinates, the angle z, and the mode to be used by the core unit (3) are output to the core unit (3); and the other information k and the function f are directly output to the third post-processing unit (6) in the post-processing unit group; the core unit (3) performs trigonometric or hyperbolic transformation on the x, y, and z based on the mode, obtains the x', y', and z', and outputs them to the third post-processing unit (6) in the post-processing unit group; and the third post-processing unit (6) obtains the output result c based on the x', y', and z' output by the core unit (3), the k given by the processor (2), and the function f; and

IV. if, under a specification adopted for input or output, a true value of the independent variable a exceeds a maximum range of the values represented by floating-point numbers, then the selector (1) directly outputs the independent variable a and the function f.

4.  The apparatus for performing multiple transcendental function operations according to Claim 3, **characterized in that** under the specification adopted for input or output in the IV operation, the true value of the independent variable a exceeds the maximum range of the values represented by floating-point numbers, as for IEEE754 half-precision floating-point number, the maximum range is the maximum absolute value of (1024+1023) or $1024 \times 2^{30-15}=65504$.

5.  A method for performing multiple transcendental function operations applied to the apparatus of any one of claims 1 to 4, **characterized in that** the method comprises:

Step 1: the selector receiving the input independent variable a and the input function f, and determining which one of the four different operations, namely, I, II, III, and IV operation should be adopted;

Step 2: when the processor adopts the III operation, the processor performing multiplication or shift transformation on the input independent variable a and the input function f so that they can be accepted by the core unit, and recording transformation information k and a sign for use by the third post-processing unit, wherein the sign is valid only in a part of functions;

Step 3: when the processor adopts the II or III operation, the core unit implementing the following four types of trigonometric or hyperbolic transformation by addition, subtraction, and shift operations on three numbers, i.e., the abscissa x, the ordinate y, and the angle z:

Trigonometric default: $(x,y,z) \rightarrow (A(x\cos z - y\sin z), A(y\cos z + x\sin z), 0)$,

Trigonometric vector: $(x, y, 0) \rightarrow (A\sqrt{x^2 + y^2}, 0, \arctan\frac{y}{x})$,

Hyperbolic default: $(x,y,z) \rightarrow (B(x\cosh z + y\sinh z), B(y\cosh z + x\sinh z), 0)$,

Hyperbolic vector: $(x, y, 0) \rightarrow (B\sqrt{x^2 - y^2}, 0, \operatorname{arctanh}\frac{y}{x})$,

wherein in the above formulae, A and B are constants related to a selected number of iterations, and the shift operation is to multiply by a power of 2;

Step 4a: when the processor adopts the I operation, the first post-processing unit calculating a linear or quadratic approximation according to the input function f and outputting the approximation; and

Step 4b: when the processor adopts the II or III operation, the second post-processing unit performing addition, subtraction, multiplying by a constant, division, and shifting operations on the output of the core unit according to the input function f and the information provided by the processor of the pre-processing unit group, and obtaining the output result c, wherein the information provided by the processor of the pre-processing unit group is valid only in the III operation.

6.  The method for performing multiple transcendental function operations according to Claim 5, **characterized in that** the I operation in the Step 1 is described as below:

I. if, under the specification adopted for input or output, the error between the result of the linear or quadratic approximation of the independent variable a and the true value thereof is limited to the last bit of mantissa in a case the result and the true value are respectively represented by floating-point numbers, resulting **in that** the independent variable a is too small, then the selector directly outputs the independent variable a and the function f to the first post-processing unit in the post-processing unit group, and the first post-processing unit obtains a linear approximation formula of the independent variable a based on the function f, and performs addition and multiplication on the independent variable a to get the output result c.

7. The method for performing multiple transcendental function operations according to Claim 5, **characterized in that** the II operation in the Step 1 is described as below:

II. if the independent variable a is not beyond the convergence domain of the core unit; is able to reach the angle z = 0 in a default mode or the ordinate y = 0 in a vector mode within a limited number of steps; and the independent variable a can be directly accepted by a corresponding mode of the core unit, then the selector obtains the x, y coordinates and the angle z of the independent variable a, and the mode to be used by the core unit according to the function f, and outputs the x, y, z, and the mode to the core unit; the core unit performs trigonometric or hyperbolic transformation on the x, y, and z based on the mode, obtains transformed x', y' coordinates and an transformed angle z', and outputs them to the second post-processing unit in the post-processing unit group; and the second post-processing unit obtains the output result c based on the x', y' coordinates and the angle z' output by the core unit and the function f.

8. The method for performing multiple transcendental function operations according to Claim 5, **characterized in that** the III operation in the Step 1 is described as below:

III. if the independent variable a cannot be directly accepted by a corresponding mode of the core unit, then the selector hands over the independent variable a and the function f to the processor for pre-processing, and the processor performs information decomposition processing on the independent variable a according to the function f, and obtains the x, y coordinates, the angle z, the mode to be used by the core unit, and the other information k, wherein the x, y coordinates, the angle z, and the mode to be used by the core unit are the same as those in II; the x, y coordinates, the angle z, and the mode to be used by the core unit are output to the core unit; and the other information k and the function f are directly output to the third post-processing unit in the post-processing unit group; the core unit performs trigonometric or hyperbolic transformation on the x, y, and z based on the mode, obtains the x', y', and z', and outputs them to the third post-processing unit in the post-processing unit group; and the third post-processing unit obtains the output result c based on the x', y', and z' output by the core unit, the k given by the processor, and the function f.

9. The method for performing multiple transcendental function operations according to Claim 5, **characterized in that** the IV operation in the Step 1 is described as below:

IV. if, under the specification adopted for input or output, the true value of the independent variable a exceeds the maximum range of the values represented by floating-point numbers, then the selector directly outputs the independent variable a and the function f.

10. The method for performing multiple transcendental function operations according to Claim 5, **characterized in that** in the Step 3, the core unit implements the following four types of trigonometric or hyperbolic transformation by addition, subtraction, and shift operations on three numbers, i.e., the abscissa x, the ordinate y, and the angle z, wherein the transformation is carried out by iterating to approximate to the rotation angle which should be performed:

whether the rotation angle $z_i$ in a step i is forward or backward is determined as below: in the default mode, the target z = 0, so when z > 0, forward rotation is performed, and when z < 0, backward rotation is performed; in the vector mode, the target y = 0, so when y > 0, backward rotation is performed, and when y < 0, forward rotation is performed;

each iteration is equivalent to performing forward or backward rotation by the angle $z_i$ and enlarging the abscissa and the ordinate by $1/\cos z_i$, wherein in the hyperbolic mode, they are enlarged by $1/\cosh z_i$ :

Trigonometric forward: $(x,y,z) \rightarrow ((x - y\tan z_i), (y + x\tan z_i), z - z_i)$
Trigonometric backward: $(x,y,z) \rightarrow ((x + y\tan z_i), (y - x\tan z_i), z + z_i)$
Hyperbolic forward: $(x,y,z) \rightarrow ((x + y\tanh z_i), (y + x\tanh z_i), z - z_i)$
Hyperbolic backward: $(x,y,z) \rightarrow ((x - y\tanh z_i), (y - x\tanh z_i), z + z_i)$

wherein in order to implement each iteration and convergence by using addition, subtraction and shift only, the following sequences should be adopted for $z_i$:

Trigonometric: $z_i$ = arctan$2^{-i}$,i = 0,1,2,...
Hyperbolic: $z_i$ = arctanh$2^{-j}$,j = i-k, n($3^{k+1}$-1)/2 + k ≤ i ≤ ($3^{k+2}$-1)/2 + k + 1, i = 1,2,3, ...

wherein the specific number of iterations, i.e., the maximum value of i, is flexibly selected based on the precision of the processed floating point number, and after the maximum number of iterations is selected, the aforementioned constants can be calculated: $A = \prod_{i=0}^{max} \frac{1}{\cos z_i}, B = \prod_{i=1}^{max} \frac{1}{\cosh z_i}.$

11. A method of performing multiple transcendental function operations, the method comprising:

a pre-processing unit group transforming an externally input independent variable a into x, y coordinates, an angle z, and other information k, and determining an operation mode to be used by a core unit;
the core unit performing trigonometric or hyperbolic transformation on the x, y coordinates and the angle z, obtaining transformed x', y' coordinates and angle z', and outputting them to a post-processing unit group; and
the post-processing unit group transforming the x', y' coordinates and the angle z' input by the core unit according to the other information k and a function f input by the pre-processing unit group to obtain an output result c.

12. The method according to Claim 11,
wherein the pre-processing unit group comprises a selector (1) and a processor (2), and the post-processing unit group comprises a first post-processing unit (4), a second post-processing unit (5) and a third post-processing unit (6), the method further comprising:
the selector (1) receiving the externally input independent variables a and the externally input function f, and determining which of four different operations should to be taken.

13. The method according to Claim 12, wherein the four different operations are:

I. if, under a specification adopted for input or output, an error between a result of the linear or quadratic approximation of the independent variable a and a true value thereof is limited to the last bit of mantissa in a case the result and the true value are respectively represented by floating-point numbers, resulting in that the independent variable a is too small, then the selector (1) directly outputs the independent variable a and the function f the first post-processing unit (4) in the post-processing unit group, and the first post-processing unit (4) obtains a linear approximation formula of the independent variable a based on the function f, and performs addition and multiplication on the independent variable a to get the output result c;
II. if the independent variable a is not beyond a convergence domain of the core unit (3); is able to reach the angle z = 0 in a default mode or an ordinate y = 0 in a vector mode within a limited number of steps; and the independent variable a can be directly accepted by a corresponding mode of the core unit (3), then the selector (1) obtains the x, y coordinates and the angle z of the independent variable a, and the mode to be used by the core unit (3) according to the function f, and outputs the x, y, z, and the mode to the core unit (3); the core unit (3) performs trigonometric or hyperbolic transformation on the x, y, and z based on the mode, obtains transformed x', y' coordinates and an transformed angle z', and outputs them to the second post-processing unit (5) in the post-processing unit group; and the second post-processing unit (5) obtains the output result c based on the x', y' coordinates and the angle z' output by the core unit (3) and the function f;
III. if the independent variable a cannot be directly accepted by a corresponding mode of the core unit (3), then the selector (1) hands over the independent variable a and the function f to the processor (2) for pre-processing, and the processor (2) performs information decomposition processing on the independent variable a according to the function f, and obtains the x, y coordinates, the angle z, the mode to be used by the core unit (3), and the other information k, wherein the x, y coordinates, the angle z, and the mode to be used by the core unit (3) are the same as those in II; the x, y coordinates, the angle z, and the mode to be used by the core unit (3) are output to the core unit (3); and the other information k and the function f are directly output to the third post-processing unit (6) in the post-processing unit group; the core unit (3) performs trigonometric or hyperbolic transformation on the x, y, and z based on the mode, obtains the x', y', and z', and outputs them to the third post-processing unit (6) in the post-processing unit group; and the third post-processing unit (6) obtains the output result c based on the x', y', and z' output by the core unit (3), the k given by the processor (2), and the function f; and
IV. if, under a specification adopted for input or output, a true value of the independent variable a exceeds a maximum range of the values represented by floating-point numbers, then the selector (1) directly outputs the independent variable a and the function f.

14. The method according to Claim 13, wherein under the specification adopted for input or output in the IV operation, the true value of the independent variable a exceeds the maximum range of the values represented by floating-point numbers, as for IEEE754 half-precision floating-point number, the maximum range is the maximum absolute value of (1024+1023) or $1024 \times 2^{30-15}=65504$.

15. The method according to any one of claims 11 to 14, the method comprising:

Step 1: the selector receiving the input independent variable a and the input function f, and determining which one of the four different operations, namely, I, II, III, and IV operation should be adopted;
Step 2: when the processor adopts the III operation, the processor performing multiplication or shift transformation on the input independent variable a and the input function f so that they can be accepted by the core unit, and recording transformation information k and a sign for use by the third post-processing unit, wherein the sign is valid only in a part of functions;
Step 3: when the processor adopts the II or III operation, the core unit implementing the following four types of trigonometric or hyperbolic transformation by addition, subtraction, and shift operations on three numbers, i.e., the abscissa x, the ordinate y, and the angle z:

Trigonometric default: $(x,y,z) \rightarrow (A(x\cos z - y\sin z), A(y\cos z + x\sin z), 0)$,

Trigonometric vector: $(x, y, 0) \rightarrow (A\sqrt{x^2 + y^2}, 0, \arctan\frac{y}{x})$,

Hyperbolic default: $(x,y,z) \rightarrow (B(x\cosh z + y\sinh z), B(y\cosh z + x\sinh z), 0)$,

Hyperbolic vector: $(x, y, 0) \rightarrow (B\sqrt{x^2 - y^2}, 0, \operatorname{arctanh}\frac{y}{x})$,

wherein in the above formulae, A and B are constants related to a selected number of iterations, and the shift operation is to multiply by a power of 2;
Step 4a: when the processor adopts the I operation, the first post-processing unit calculating a linear or quadratic approximation according to the input function f and outputting the approximation; and
Step 4b: when the processor adopts the II or III operation, the second post-processing unit performing addition, subtraction, multiplying by a constant, division, and shifting operations on the output of the core unit according to the input function f and the information provided by the processor of the pre-processing unit group, and obtaining the output result c, wherein the information provided by the processor of the pre-processing unit group is valid only in the III operation.

**Patentansprüche**

1. Vorrichtung zum Durchführen mehrerer Operationen transzendenter Funktionen, **dadurch gekennzeichnet, dass** die Vorrichtung eine Einheitengruppe zur Vorverarbeitung, eine Kerneinheit und eine Einheitengruppe zur Nachverarbeitung umfasst, wobei:

die Einheitengruppe zur Vorverarbeitung konfiguriert ist, um eine extern eingegebene unabhängige Variable a in x-, y- Koordinaten, einen Winkel z und andere Informationen k zu transformieren und einen Betriebsmodus, der von der Kerneinheit verwendet werden soll, zu bestimmen;
die Kerneinheit ist konfiguriert, um eine trigonometrische oder hyperbolische Transformation der x-, y-Koordinaten und des Winkels z durchzuführen, transformierte x'-, y'-Koordinaten und den Winkel z' zu erhalten und diese an die Einheitengruppe zur Nachverarbeitung auszugeben; und
die Einheitengruppe zur Nachverarbeitung ist konfiguriert, um die von der Kerneinheit eingegebenen x'-, y'-Koordinaten und den Winkel z' gemäß der anderen Informationen k und einer von der Einheitengruppe zur Vorverarbeitung eingegebenen Funktion f zu transformieren, um ein Ausgabeergebnis c zu erhalten.

2. Die Vorrichtung zum Durchführen mehrerer Operationen transzendenter Funktionen nach Anspruch 1, **dadurch gekennzeichnet, dass** die Einheitengruppe zur Vorverarbeitung einen Selektor (1) und einem Prozessor (2) umfasst, und dass die Einheitengruppe zur Nachverarbeitung eine erste Einheit zur Nachverarbeitung (4), eine zweite Einheit zur Nachverarbeitung (5) und eine dritte Einheit zur Nachverarbeitung (6) umfasst, wobei der Selektor (1) die extern eingegebene unabhängige Variable a und die extern eingegebenen Funktion f empfängt und bestimmt, welche von vier unterschiedlichen Operationen durchgeführt werden soll.

3. Die Vorrichtung zum Durchführen mehrerer Operationen transzendenter Funktionen nach Anspruch 2, wobei die vier unterschiedlichen Operationen, sind:

I. wenn, gemäß der für die Eingabe oder Ausgabe angenommenen Spezifikation, ein Fehler zwischen einem Ergebnis der linearen oder quadratischen Näherung der unabhängigen Variable a und ihrem wahren Wert auf das letzte Bit der Mantisse in einem Fall, in dem das Ergebnis und der wahre Wert jeweils durch Gleitkommazahlen dargestellt werden, beschränkt ist, was dazu führt, dass die unabhängige Variable a zu klein ist, dann gibt der Selektor (1) direkt die unabhängige Variable a und die Funktion f an die erste Einheit zur Nachverarbeitung (4) in der Einheitengruppe zur Nachverarbeitung aus und die erste Einheit zur Nachverarbeitung (4) erhält eine Formel zur lineare Näherung der unabhängigen Variablen a basierend auf der Funktion f und führt Addition und Multiplikation an der unabhängigen Variable a durch, um das Ausgabeergebnis c zu erhalten;
II. wenn die unabhängige Variable a nicht außerhalb des Konvergenzbereichs der Kerneinheit (3) liegt; es ist möglich, den Winkel z = 0 in einem Standardmodus oder eine Ordinate y = 0 in einem Vektormodus innerhalb einer begrenzten Anzahl von Schritten zu erreichen; und die unabhängige Variable a kann direkt von einem entsprechenden Modus der Kerneinheit (3) akzeptiert werden, dann erhält der Selektor (1) die x-, y-Koordinaten und den Winkel z der unabhängigen Variablen a und den von der Kerneinheit (3) zu verwendenden Modus gemäß der Funktion f und gibt x, y, z und den Modus an die Kerneinheit (3) aus; die Kerneinheit (3) führt trigonometrische oder hyperbolische Transformation basierend auf dem Modus an x, y und z durch und erhält transformierte x'-, y'-Koordinaten und einen transformierten Winkel z' und gibt sie an die zweite Einheit zur Nachverarbeitung (5) in der Einheitengruppe zur Nachverarbeitung aus; und die zweite Einheit zur Nachverarbeitung (5) erhält das Ausgabeergebnis c basierend auf den x'-, y' - Koordinaten und dem Winkel z', der von der Kerneinheit (3) und der Funktion f ausgegeben wird;
III. wenn die unabhängige Variable a von einem entsprechenden Modus der Kerneinheit (3) nicht direkt akzeptiert werden kann, dann übergibt der Selektor (1) die unabhängige Variable a und die Funktion f zur Vorverarbeitung an den Prozessor (2) und die der Prozessor (2) führt ein Dekompositionsverfahren der Information an der unabhängige Variable a gemäß der Funktion f durch und erhält die x-, y-Koordinaten, den Winkel z und den von der Kerneinheit (3) zu verwendenden Modus und die anderen Informationen k, wobei die x-, y-Koordinaten, der Winkel z und der von der Kerneinheit (3) zu verwendende Modus dieselben sind wie die in II; die x-, y-Koordinaten, der Winkel z und der von der Kerneinheit (3) zu verwendende Modus werden an die Kerneinheit (3) ausgegeben; und die anderen Informationen k und die Funktion f werden direkt an die dritte Einheit zur Nachverarbeitung (6) in der Einheitengruppe zur Nachverarbeitung ausgegeben; die Kerneinheit (3) führt eine trigonometrische oder hyperbolische Transformation an x, y und z basierend auf dem Modus durch, erhält die x', y' und z' und gibt sie an die dritte Einheit zur Nachverarbeitung (6) in der Einheitengruppe zur Nachverarbeitung; und die dritte Einheit zur Nachverarbeitung (6) erhält das Ausgabeergebnis c basierend auf den von der Kerneinheit (3) ausgegebenen x', y' und z', das vom Prozessor (2) gegebenen k und die Funktion f; und
IV. wenn gemäß der für die Eingabe oder Ausgabe angenommenen Spezifikation der wahre Wert der unabhängigen Variablen a einen maximalen Bereich der durch Gleitkommazahlen dargestellten Werte überschreitet, dann gibt der Selektor (1) die unabhängige Variable a und die Funktion f direkt aus.

4. Die Vorrichtung zum Durchführen mehrerer Operationen transzendenter Funktionen nach Anspruch 3, **dadurch gekennzeichnet, dass**, gemäß der für die Eingabe oder Ausgabe angenommenen Spezifikation der IV Operation, der wahre Wert der unabhängigen Variablen a den maximalen Bereich der durch Gleitkommazahlen dargestellten Werte überschreitet, wie nach IEEE754 Gleitkommazahl mit halber Präzision, ist der maximale Bereich der maximale Absolutwert von (1024+1023) oder $1024 \times 2^{30-15} = 65504$.

5. Ein Verfahren zum Durchführen mehrerer Operationen transzendenter Funktionen, das auf die Vorrichtung nach einem der Ansprüche 1 bis 4 angewendet wird, **dadurch gekennzeichnet, dass** das Verfahren umfasst:

Schritt 1: der Selektor empfängt die von der Eingabe unabhängige Variable a und die Eingabefunktion f und bestimmt welche der vier verschiedenen Operationen, nämlich Operation I, II, III und IV übernommen werden sollte;
Schritt 2: wenn der Prozessor die Operation III übernimmt, führt der Prozessor eine Multiplikations- oder Verschiebungstransformation an der von der Eingabe unabhängigen Variablen a und der Eingabefunktion f durch, so dass sie von der Kerneinheit akzeptiert werden können, und zeichnet Transformationsinformationen k und ein Vorzeichen zur Verwendung durch die dritte Einheit zur Nachverarbeitung auf, wobei das Vorzeichen nur in einem Teil von Funktionen gültig ist;

Schritt 3: wenn der Prozessor die Operation II oder III übernimmt, implementiert die Kerneinheit die folgenden vier Arten von trigonometrischen oder hyperbolischen Transformationen durch Additions-, Subtraktions- und Verschiebungsoperationen an drei Zahlen, d.h. der Abszisse x, der Ordinate y, und dem Winkel z:

Trigonometrischer Standard: $(x,y,z) \rightarrow (A(xcosz - ysinz), A(ycosz + xsinz), 0)$,

Trigonometrischer Vektor: $(x, y, 0) \rightarrow (A\sqrt{x^2 + y^2}, 0, arctan\frac{x}{y})$,

Hyperbolischer Standard: $(x,y,z) \rightarrow (B(xcoshz + ysinhz), B(ycoshz + xsinhz), 0)$,

Hyperbolischer Vektor: $(x, y, 0) \rightarrow (B\sqrt{x^2 - y^2}, 0, arctanh\frac{y}{x})$,

wobei, in den obigen Formeln, A und B Konstanten sind, die sich auf eine ausgewählte Anzahl von Wiederholungen beziehen, und die Verschiebungsoperation mit einer Potenz von 2 multipliziert werden soll;

Schritt 4a: wenn der Prozessor die Operation I übernimmt, berechnet die erste Einheit zur Nachverarbeitung eine lineare oder quadratische Näherung gemäß der Eingabefunktion f und gibt die Näherung aus; und

Schritt 4b: wenn der Prozessor die Operation II oder III übernimmt, führt die zweite Einheit zur Nachverarbeitung Additions-, Subtraktions-, Multiplikations-, Divisions- und Verschiebungsoperationen an der Ausgabe der Kerneinheit gemäß der Eingabefunktion f durch und die vom Prozessor der Einheitengruppe zur Vorverarbeitung bereitgestellten Informationen und erhält das Ausgabeergebnis c, wobei die vom Prozessor der Einheitengruppe zur Vorverarbeitung bereitgestellten Informationen nur in der Operation III gültig sind.

6. Das Verfahren zum Durchführen mehrerer Operationen transzendenter Funktionen nach Anspruch 5, **dadurch gekennzeichnet, dass** die Operation I im Schritt 1 wie unten beschriebenen wird:

I. wenn, gemäß der für die Eingabe oder Ausgabe angenommenen Spezifikation, der Fehler zwischen dem Ergebnis der linearen oder quadratischen Näherung der unabhängigen Variable a und ihrem wahren Wert auf das letzte Bit der Mantisse in einem Fall, in dem das Ergebnis und der wahre Wert jeweils durch Gleitkommazahlen dargestellt werden, beschränkt ist, was dazu führt, dass die unabhängige Variable a zu klein ist, dann gibt der Selektor direkt die unabhängige Variable a und die Funktion f an die erste Einheit zur Nachverarbeitung in der Einheitengruppe zur Nachverarbeitung aus und die erste Einheit zur Nachverarbeitung erhält eine Formel zur lineare Näherung der unabhängigen Variablen a basierend auf der Funktion f und führt Addition und Multiplikation an der unabhängigen Variable a durch, um das Ausgabeergebnis c zu erhalten.

7. Das Verfahren zum Durchführen mehrerer Operationen transzendenter Funktionen nach Anspruch 5, **dadurch gekennzeichnet, dass** die Operation II im Schritt 1 wie unten beschriebenen wird:

II. wenn die unabhängige Variable a nicht außerhalb des Konvergenzbereichs der Kerneinheit liegt; ist es möglich, den Winkel z = 0 in einem Standardmodus oder die Ordinate y = 0 in einem Vektormodus innerhalb einer begrenzten Anzahl von Schritten zu erreichen; und die unabhängige Variable a kann direkt von einem entsprechenden Modus der Kerneinheit akzeptiert werden, dann erhält der Selektor die x-, y-Koordinaten und den Winkel z der unabhängigen Variablen a und den von der Kerneinheit zu verwendenden Modus gemäß der Funktion f und gibt x, y, z und den Modus an die Kerneinheit aus; die Kerneinheit führt trigonometrische oder hyperbolische Transformation basierend auf dem Modus an x, y und z durch, erhält transformierte x'-, y'-Koordinaten und einen transformierten Winkel z' und gibt sie an die zweite Einheit zur Nachverarbeitung in der Einheitengruppe zur Nachverarbeitung aus; und die zweite Einheit zur Nachverarbeitung erhält das Ausgabeergebnis c basierend auf den x'-, y' -Koordinaten und dem Winkel z', der von der Kerneinheit und der Funktion f ausgegeben wird.

8. Das Verfahren zum Durchführen mehrerer Operationen transzendenter Funktionen nach Anspruch 5, **dadurch gekennzeichnet, dass** die Operation III im Schritt 1 wie unten beschriebenen wird:

III. wenn die unabhängige Variable a von einem entsprechenden Modus der Kerneinheit nicht direkt akzeptiert werden kann, dann übergibt der Selektor die unabhängige Variable a und die Funktion f an den Prozessor zur Vorverarbeitung und die der Prozessor führt ein Dekompositionsverfahren der Information an der unabhängige Variable a gemäß der Funktion f durch und erhält die x-, y-Koordinaten, den Winkel z und den von der Kerneinheit zu verwendenden Modus und die anderen Informationen k, wobei die x-, y-Koordinaten, der Winkel z und der von der Kerneinheit zu verwendende Modus dieselben sind wie die in II; die x-, y-Koordinaten, der Winkel z und der von der Kerneinheit zu verwendende Modus werden an die Kerneinheit ausgegeben; und die anderen Informationen k und die Funktion f werden direkt an die dritte Einheit zur Nachverarbeitung in der Einheitengruppe zur Nachverarbeitung ausgegeben; die Kerneinheit führt eine trigonometrische oder hyperbolische Transformation an x, y und z basierend auf dem Modus durch, erhält die x', y' und z' und gibt sie an die dritte Einheit zur Nachverarbeitung in der Einheitengruppe zur Nachverarbeitung; und die dritte Einheit zur Nachverarbeitung erhält das Ausgabeergebnis c basierend auf den von der Kerneinheit ausgegebenen x', y' und z', das vom Prozessor gegebenen k und die Funktion f.

9. Das Verfahren zum Durchführen mehrerer Operationen transzendenter Funktionen nach Anspruch 5, **dadurch gekennzeichnet, dass** die Operation IV im Schritt 1 wie unten beschriebenen wird:

IV. wenn gemäß der für die Eingabe oder Ausgabe angenommenen Spezifikation der wahre Wert der unabhängigen Variablen a einen maximalen Bereich der durch Gleitkommazahlen dargestellten Werte überschreitet, dann gibt der Selektor die unabhängige Variable a und die Funktion f direkt aus.

10. Das Verfahren zum Durchführen mehrerer Operationen transzendenter Funktionen nach Anspruch 5, **dadurch gekennzeichnet, dass** die in Schritt 3 die Kerneinheit die folgenden vier Arten von trigonometrischen oder hyperbolischen Transformationen durch Addition, Subtraktion und Verschiebungsoperationen an drei Zahlen, d.h. der Abszisse x, der Ordinate y und dem Winkel z implementiert, wobei die Transformation durch Wiederholung durchgeführt wird, um den Drehwinkel zu nähern, der durchgeführt werden soll:

ob der Drehwinkel $z_i$ in einem Schritt i vorwärts oder rückwärts ist, wird wie folgt bestimmt: im Standardmodus ist das Ziel z = 0, wenn also z > 0 ist, wird eine Vorwärtsdrehung ausgeführt, und wenn z < 0 ist, wird eine Rückwärtsdrehung ausgeführt; im Vektormodus ist das Ziel y = 0, wenn also y > 0 ist, wird eine Rückwärtsdrehung durchgeführt, und wenn y < 0 ist, wird eine Vorwärtsdrehung durchgeführt;
jede Wiederholung entspricht der Durchführung einer Vorwärts- oder Rückwärtsdrehung um den Winkel $z_i$ und der Vergrößerung der Abszisse und der Ordinate um $1/\cos z_i$, wobei sie im hyperbolischen Modus um $1/\cosh z_i$ vergrößert werden:

Trigonometrische vorwärts: $(x,y,z) \rightarrow ((x - y\tan z_i), (y + x\tan z_i), z - z_i)$
Trigonometrisch rückwärts: $(x,y,z) \rightarrow ((x + y\tan z_i), (y - x\tan z_i), z + z_i)$
Hyperbolisch vorwärts: $(x,y,z) \rightarrow ((x + y\tanh z_i), (y + x\tanh z_i), z - z_i)$
Hyperbolisch rückwärts: $(x,y,z) \rightarrow ((x - y\tanh z_i), (y - x\tanh z_i), z + z_i)$

wobei zur Implementierung jeder Wiederholung und Konvergenz nur durch Addition, Subtraktion und Verschiebung die folgenden Sequenzen für $z_i$ übernommen werden sollten:

Trigonometrisch: $z_i = \arctan 2^{-i}, i = 0,1,2,...$
Hyperbolisch: $z_i = \operatorname{arctanh} 2^{-j}, j = i - k$, wenn $(3^{k+1} - 1)/2 + k \leq i \leq (3^{k+2} - 1)/2 + k + 1, i = 1,2,3, ...$

wobei die spezifische Anzahl von Wiederholungen, d.h. der Maximalwert von i, basierend auf der Genauigkeit der verarbeiteten Gleitkommazahl flexibel ausgewählt wird und nachdem die maximale Anzahl von Wiederholungen ausgewählt wurde, können die oben genannten Konstanten berechnet werden:

$$A = \prod_{i=0}^{max} \frac{1}{\cos z_i}, B = \prod_{i=1}^{max} \frac{1}{\cosh z_i}$$

11. Ein Verfahren zum Durchführen mehrerer Operationen transzendenter Funktionen, dass das Verfahren umfasst:

eine Einheitengruppe zur Vorverarbeitung, die eine extern eingegebene unabhängige Variable a in x-, y- Koordinaten, einen Winkel z und andere Informationen transformiert und einen Betriebsmodus, der von der Kerneinheit verwendet werden soll, bestimmt;
die Kerneinheit, die trigonometrische oder hyperbolische Transformation der x-, y-Koordinaten und des Winkels z durchführt, transformierte x'-, y'-Koordinaten und den Winkel z' zu erhält und diese an die Einheitengruppe zur Nachverarbeitung ausgibt; und
die Einheitengruppe zur Nachverarbeitung, die die von der Kerneinheit eingegebenen x'-, y'-Koordinaten und den Winkel z' gemäß der anderen Informationen k und einer von der Einheitengruppe zur Vorverarbeitung eingegebenen Funktion f zu transformiert, um ein Ausgabeergebnis c zu erhalten.

**12.** Das Verfahren nach Anspruch 11,
wobei die Einheitengruppe zur Vorverarbeitung einen Selektor (1) und einen Prozessor (2) umfasst, und die Einheitengruppe zur Nachverarbeitung eine erste Einheit zur Nachverarbeitung (4), eine zweite Einheit zur Nachverarbeitung (5) und eine dritte Einheit zur Nachverarbeitung (6) umfasst,
wobei das Verfahren weiter umfasst:
einen Selektor (1), der die extern eingegebene unabhängige Variable a und die extern eingegebene Funktion f empfängt und bestimmt, welche von vier unterschiedlichen Operationen durchgeführt werden soll.

**13.** Das Verfahren nach Anspruch 12, wobei die vier unterschiedlichen Operationen sind:

I. wenn, gemäß der für die Eingabe oder Ausgabe angenommenen Spezifikation, ein Fehler zwischen einem Ergebnis der linearen oder quadratischen Näherung der unabhängigen Variable a und ihrem wahren Wert auf das letzte Bit der Mantisse in einem Fall, in dem das Ergebnis und der wahre Wert jeweils durch Gleitkommazahlen dargestellt werden, beschränkt ist, was dazu führt, dass die unabhängige Variable a zu klein ist, dann gibt der Selektor (1) direkt die unabhängige Variable a und die Funktion f an die erste Einheit zur Nachverarbeitung (4) in der Einheitengruppe zur Nachverarbeitung aus und die erste Einheit zur Nachverarbeitung (4) erhält eine Formel zur lineare Näherung der unabhängigen Variablen a basierend auf der Funktion f und führt Addition und Multiplikation an der unabhängigen Variable a durch, um das Ausgabeergebnis c zu erhalten;
II. wenn die unabhängige Variable a nicht außerhalb des Konvergenzbereichs der Kerneinheit (3) liegt; es ist möglich, den Winkel z = 0 in einem Standardmodus oder eine Ordinate y = 0 in einem Vektormodus innerhalb einer begrenzten Anzahl von Schritten zu erreichen; und die unabhängige Variable a kann direkt von einem entsprechenden Modus der Kerneinheit (3) akzeptiert werden, dann erhält der Selektor (1) die x-, y-Koordinaten und den Winkel z der unabhängigen Variablen a und den von der Kerneinheit (3) zu verwendenden Modus gemäß der Funktion f und gibt x, y, z und den Modus an die Kerneinheit (3) aus; die Kerneinheit (3) führt trigonometrische oder hyperbolische Transformation basierend auf dem Modus an x, y und z durch und erhält transformierte x'-, y'-Koordinaten und einen transformierten Winkel z' und gibt sie an die zweite Einheit zur Nachverarbeitung (5) in der Einheitengruppe zur Nachverarbeitung aus; und die zweite Einheit zur Nachverarbeitung (5) erhält das Ausgabeergebnis c basierend auf den x'-, y' - Koordinaten und dem Winkel z', der von der Kerneinheit (3) und der Funktion f ausgegeben wird;
III. wenn die unabhängige Variable a von einem entsprechenden Modus der Kerneinheit (3) nicht direkt akzeptiert werden kann, dann übergibt der Selektor (1) die unabhängige Variable a und die Funktion f zur Vorverarbeitung an den Prozessor (2) und die der Prozessor (2) führt ein Dekompositionsverfahren der Information an der unabhängige Variable a gemäß der Funktion f durch und erhält die x-, y-Koordinaten, den Winkel z und den von der Kerneinheit (3) zu verwendenden Modus und die anderen Informationen k, wobei die x-, y-Koordinaten, der Winkel z und der von der Kerneinheit (3) zu verwendende Modus dieselben sind wie die in II; die x-, y-Koordinaten, der Winkel z und der von der Kerneinheit (3) zu verwendende Modus werden an die Kerneinheit (3) ausgegeben; und die anderen Informationen k und die Funktion f werden direkt an die dritte Einheit zur Nachverarbeitung (6) in der Einheitengruppe zur Nachverarbeitung ausgegeben; die Kerneinheit (3) führt eine trigonometrische oder hyperbolische Transformation an x, y und z basierend auf dem Modus durch, erhält die x', y' und z' und gibt sie an die dritte Einheit zur Nachverarbeitung (6) in der Einheitengruppe zur Nachverarbeitung; und die dritte Einheit zur Nachverarbeitung (6) erhält das Ausgabeergebnis c basierend auf den von der Kerneinheit (3) ausgegebenen x', y' und z', das vom Prozessor (2) gegebenen k und die Funktion f; und
IV. wenn gemäß der für die Eingabe oder Ausgabe angenommenen Spezifikation der wahre Wert der unabhängigen Variablen a einen maximalen Bereich der durch Gleitkommazahlen dargestellten Werte überschreitet, dann gibt der Selektor (1) die unabhängige Variable a und die Funktion f direkt aus.

**14.** Das Verfahren nach Anspruch 13, wobei gemäß der für die Eingabe oder Ausgabe angenommenen Spezifikation der IV Operation, der wahre Wert der unabhängigen Variablen a den maximalen Bereich der durch Gleitkommazahlen dargestellten Werte überschreitet, wie nach IEEE754 Gleitkommazahl mit halber Präzision, ist der maximale Bereich der maximale Absolutwert von (1024+1023) oder $1024 \times 2^{30-15} = 65504$.

**15.** Das Verfahren nach einem der Ansprüche 11 bis 14, das Verfahren umfassend:

Schritt 1: der Selektor empfängt die von der Eingabe unabhängige Variable a und die Eingabefunktion f und bestimmt welche der vier verschiedenen Operationen, nämlich Operation I, II, III und IV übernommen werden sollte;
Schritt 2: wenn der Prozessor die Operation III übernimmt, führt der Prozessor eine Multiplikations- oder Verschiebungstransformation an der von der Eingabe unabhängigen Variablen a und der Eingabefunktion f durch, so dass sie von der Kerneinheit akzeptiert werden können, und zeichnet Transformationsinformationen k und ein Vorzeichen zur Verwendung durch die dritte Einheit zur Nachverarbeitung auf, wobei das Vorzeichen nur in einem Teil von Funktionen gültig ist;

Schritt 3: wenn der Prozessor die Operation II oder III übernimmt, implementiert die Kerneinheit die folgenden vier Arten von trigonometrischen oder hyperbolischen Transformationen durch Additions-, Subtraktions- und Verschiebungsoperationen an drei Zahlen, d.h. der Abszisse x, der Ordinate y, und dem Winkel z:

Trigonometrischer Standard: $(x,y,z) \rightarrow (A(xcosz - ysinz), A(ycosz + xsinz), 0)$,

Trigonometrischer Vektor: $(x, y, 0) \rightarrow (A\sqrt{x^2 + y^2}, 0, arctan\frac{x}{y})$,

Hyperbolischer Standard: $(x,y,z) \rightarrow (B(xcoshz + ysinhz), B(ycoshz + xsinhz), 0)$,

Hyperbolischer Vektor: $(x, y, 0) \rightarrow (B\sqrt{x^2 - y^2}, 0, arctanh\frac{y}{x})$,

wobei, in den obigen Formeln, A und B Konstanten sind, die sich auf eine ausgewählte Anzahl von Wiederholungen beziehen, und die Verschiebungsoperation mit einer Potenz von 2 multipliziert werden soll;

Schritt 4a: wenn der Prozessor die Operation I übernimmt, berechnet die erste Einheit zur Nachverarbeitung eine lineare oder quadratische Näherung gemäß der Eingabefunktion f und gibt die Näherung aus; und

Schritt 4b: wenn der Prozessor die Operation II oder III übernimmt, führt die zweite Einheit zur Nachverarbeitung Additions-, Subtraktions-, Multiplikations-, Divisions- und Verschiebungsoperationen an der Ausgabe der Kerneinheit gemäß der Eingabefunktion f durch und die vom Prozessor der Einheitengruppe zur Vorverarbeitung bereitgestellten Informationen und erhält das Ausgabeergebnis c, wobei die vom Prozessor der Einheitengruppe zur Vorverarbeitung bereitgestellten Informationen nur in der Operation III gültig sind.

## Revendications

1. Appareil pour exécuter multiples opérations de fonction transcendante, **caractérisé en ce que** l'appareil comprend un groupe d'unités de prétraitement, une unité centrale et un groupe d'unités de post-traitement, dans lequel :

le groupe d'unités de prétraitement est configuré de manière à transformer une variable indépendante entrée de manière externe a en coordonnés x, y, un angle z, et autres informations k, et déterminer un mode d'opération à être utilisé par l'unité centrale ;

l'unité centrale est configurée de manière à effectuer une transformation trigonométrique ou hyperbolique sur les coordonnées x, y et l'angle z, obtenir les coordonnées x', y' et l'angle z' transformés, et les sort au groupe d'unités de post-traitement; et

le groupe d'unités de post-traitement est configuré de manière à transformer les coordonnées x', y' et l'angle z' entrés par l'unité centrale selon les autres informations k et une fonction f entrée par le groupe d'unités de prétraitement pour obtenir un résultat de sortie c.

2. Appareil pour exécuter multiples opérations de fonction transcendante selon la revendication 1, **caractérisé en ce que** le groupe d'unités de prétraitement comprend un sélecteur (1) et un processeur (2), et le groupe d'unités de post-traitement comprend une première unité de post-traitement (4), une deuxième unité de post-traitement (5) et un troisième unité de post-traitement (6), dans lequel le sélecteur (1) reçoit les variables indépendantes entrée de manière externe a et la fonction entrée de manière externe f, et détermine laquelle de quatre opérations différentes devrait être prise.

3. Appareil pour exécuter multiples opérations de fonction transcendante selon la revendication 2, dans lequel les quatre opérations différentes sont :

I. si, selon une spécification adoptée pour les entrées ou sorties, une erreur entre un résultat de l'approximation linéaire ou quadratique de la variable indépendante a et une vraie valeur de celle-ci est limitée au dernier bit de mantisse dans un cas le résultat et la vraie valeur sont respectivement représentés par des nombres à virgule flottante, résultant en ce que la variable indépendante a est trop petite, alors le sélecteur (1) sort directement la variable indépendante a et la fonction f à la première unité de post-traitement (4) du groupe d'unités de post-traitement, et la première unité de post-traitement (4) obtient une formule d'approximation linéaire de la variable indépendante a basée sur la fonction f, et effectue des additions et des multiplications sur la variable indépendante a pour obtenir le résultat de sortie c ;

II. si la variable indépendante a n'est pas au-delà d'un domaine de convergence de l'unité centrale (3); est capable d'atteindre l'angle z = 0 dans un mode par défaut ou une ordonnée y = 0 dans un mode vectoriel en un nombre limité d'étapes; et la variable indépendante a peut être directement acceptée par un mode correspondant de l'unité centrale (3), alors le sélecteur (1) obtient les coordonnées x, y et l'angle z de la variable indépendante a, et le mode à être utilisé par l'unité centrale (3) selon la fonction f, et sort les x, y, z et le mode à l'unité centrale (3); l'unité centrale (3) effectue une transformation trigonométrique ou hyperbolique sur les x, y et z basée sur le mode, obtient les coordonnées transformées x', y' et un angle transformé z', et les sort à la deuxième unité de post-traitement (5) dans le groupe d'unités de post-traitement; et la deuxième unité de post-traitement (5) obtient le résultat de sortie c basé sur les coordonnées x', y' et l'angle z' sortis par l'unité centrale (3) et la fonction f;

III. si la variable indépendante a ne peut pas être directement acceptée par un mode correspondant de l'unité centrale (3), alors le sélecteur (1) remet la variable indépendante a et la fonction f au processeur (2) pour prétraitement, et le processeur (2) effectue un traitement de décomposition d'information sur la variable indépendante a selon la fonction f, et obtient les coordonnées x, y, l'angle z, le mode à être utilisé par l'unité centrale (3), et les autres informations k, dans lequel les coordonnées x, y, l'angle z et le mode à être utilisé par l'unité centrale (3) sont les mêmes que ceux de II; les coordonnées x, y, l'angle z et le mode à être utilisé par l'unité centrale (3) sont sortis à l'unité centrale (3); et l'autre information k et la fonction f sont directement sorties à la troisième unité de post-traitement (6) dans le groupe d'unités de post-traitement; l'unité centrale (3) effectue une transformation trigonométrique ou hyperbolique sur les x, y et z basée sur le mode, obtient les x', y' et z', et les sort à la troisième unité de post-traitement (6) dans le groupe d'unités de post-traitement; et la troisième unité de post-traitement (6) obtient le résultat de sortie c basé sur les sorties x', y' et z' de l'unité centrale (3), le k donné par le processeur (2), et la fonction f ; and

IV. si, selon une spécification adoptée pour les entrées ou sorties, une vraie valeur de la variable indépendante a dépasse une plage maximale des valeurs représentées par des nombres à virgule flottante, alors le sélecteur (1) sort directement la variable indépendante a et la fonction f.

4. Appareil pour exécuter multiples opérations de fonction transcendante selon la revendication 3, **caractérisé en ce que** selon la spécification adoptée pour les entrées ou sorties dans l'opération IV, la vraie valeur de la variable indépendante a dépasse la plage maximale des valeurs représentées par des nombres à virgule flottante, quant au nombre à virgule flottante de demi-précision IEEE754, la plage maximale est la valeur absolue maximale de (1024+1023) ou $1024 \times 2^{30-15} = 65504$.

5. Procédé pour exécuter multiples opérations de fonction transcendante appliquées à l'appareil selon l'une quelconque des revendications 1 à 4, **caractérisé en ce que** le procédé comprend :

Étape 1: le sélecteur recevant la variable indépendante d'entrée a et la fonction d'entrée f, et déterminant laquelle des quatre opérations différentes, à savoir I, II, III et IV, devrait être adoptée;

Étape 2: lorsque le processeur adopte l'opération III, le processeur effectuant une multiplication ou une transformation de décalage sur la variable indépendante d'entrée a et la fonction d'entrée f afin qu'elles puissent être acceptées par l'unité centrale, et enregistrant les informations de transformation k et un signe pour utilisation par la troisième unité de post-traitement, dans lequel le signe n'est valable seulement que dans une partie des fonctions;

Étape 3 : lorsque le processeur adopte l'opération II ou III, l'unité centrale mettant en œuvre les quatre types de transformation trigonométrique ou hyperbolique suivants par des opérations d'addition, de soustraction et de décalage sur trois nombres, c'est-à-dire, l'abscisse x, l'ordonnée y et l'angle z:

Valeur par default trigonométrique : $(x, y, z) \rightarrow (A(xcosz - ysinz), A(ycosz + xsinz), 0)$,

Vecteur trigonométrique : $(x, y, 0) \rightarrow (A\sqrt{x^2 + y^2}, 0, arctan\frac{x}{y'})$,

Valeur par default hyperbolique : $(x, y, z) \rightarrow (B(xcoshz + ysinhz), B(ycoshz + xsinhz), 0)$,

Vecteur hyperbolique : $(x, y, 0) \rightarrow (B\sqrt{x^2 - y^2}, 0, arctanh\frac{y}{x})$,

dans lequel dans les formules ci-dessus, A et B sont des constantes liées à un nombre sélectionné d'itérations, et l'opération de décalage consiste à multiplier par une puissance de 2 ;

Étape 4a: lorsque le processeur adopte l'opération I, la première unité de post-traitement calculant une approximation linéaire ou quadratique selon la fonction d'entrée f et sortant l'approximation; et

Étape 4b: lorsque le processeur adopte l'opération II ou III, la deuxième unité de post-traitement effectuant des opérations d'addition, de soustraction, de multiplication par une constante, de division et de décalage sur la sortie de l'unité centrale selon la fonction d'entrée f et l'information fournie par le processeur du groupe d'unités de prétraitement, et l'obtenant le résultat de sortie c, dans lequel l'information fournie par le processeur du groupe d'unités de prétraitement n'est valable seulement que dans l'opération III.

6. Procédé pour exécuter multiples opérations de fonction transcendante appliquées à l'appareil selon la revendication5, **caractérisé en ce que** l'opération I à l'Étape 1 est décrite telle que ci-dessous :

I. si, selon la spécification adoptée pour les entrées ou sorties, l'erreur entre le résultat de l'approximation linéaire ou quadratique de la variable indépendante a et la vraie valeur de celle-ci est limitée au dernier bit de mantisse dans un cas où le résultat et la vraie valeur sont respectivement représentés par des nombres à virgule flottante, résultant **en ce que** la variable indépendante a est trop petite, alors le sélecteur sort directement la variable indépendante a et la fonction f à la première unité de post-traitement du groupe d'unités de post-traitement, et la première unité de post-traitement obtient une formule d'approximation linéaire de la variable indépendante a basée sur la fonction f, et effectue des additions et des multiplications sur la variable indépendante a pour obtenir le résultat de sortie c.

7. Procédé pour exécuter multiples opérations de fonction transcendante appliquées à l'appareil selon la revendication 5, **caractérisé en ce que** l'opération II à l'Étape 1 est décrite telle que ci-dessous :

II. si la variable indépendante a n'est pas au-delà du domaine de convergence de l'unité centrale; est capable d'atteindre l'angle z = 0 dans un mode par défaut ou l'ordonnée y = 0 dans un mode vectoriel en un nombre limité d'étapes; et la variable indépendante a peut être directement acceptée par un mode correspondant de l'unité centrale, alors le sélecteur obtient les coordonnées x, y et l'angle z de la variable indépendante a, et le mode à être utilisé par l'unité centrale selon la fonction f, et sort les x, y, z et le mode à l'unité centrale; l'unité centrale effectue une transformation trigonométrique ou hyperbolique sur les x, y et z basée sur le mode, obtient les coordonnées transformées x', y' et un angle transformé z', et les sort à la deuxième unité de post-traitement dans le groupe d'unités de post-traitement; et la deuxième unité de post-traitement obtient le résultat de sortie c basé sur les coordonnées x', y' et l'angle z' sortis par l'unité centrale et la fonction f;

8. Procédé pour exécuter multiples opérations de fonction transcendante appliquées à l'appareil selon la revendication 5, **caractérisé en ce que** l'opération III à l'Étape 1 est décrite telle que ci-dessous :

III. si la variable indépendante a ne peut pas être directement acceptée par un mode correspondant de l'unité centrale, alors le sélecteur remet la variable indépendante a et la fonction f au processeur pour prétraitement, et le processeur effectue un traitement de décomposition d'information sur la variable indépendante a selon la fonction f, et obtient les coordonnées x, y, l'angle z, le mode à être utilisé par l'unité centrale, et les autres informations k, dans lequel les coordonnées x, y, l'angle z et le mode à être utilisé par l'unité centrale sont les mêmes que ceux de II; les coordonnées x, y, l'angle z et le mode à être utilisé par l'unité centrale sont sortis à l'unité centrale ; et les autres informations k et la fonction f sont directement sorties à la troisième unité de post-traitement dans le groupe d'unités de post-traitement; l'unité centrale effectue une transformation trigonométrique ou hyperbolique sur les x, y et z basée sur le mode, obtient les x', y' et z', et les sort à la troisième unité de post-traitement dans le groupe d'unités de post-traitement; et la troisième unité de post-traitement obtient le résultat de sortie c basé sur les sorties x', y' et z' de l'unité centrale, le k donné par le processeur, et la fonction f.

9. Procédé pour exécuter multiples opérations de fonction transcendante appliquées à l'appareil selon la revendication 5, **caractérisé en ce que** l'opération VI à l'Étape 1 est décrite telle que ci-dessous :

IV. si, selon une spécification adoptée pour les entrées ou sorties, la vraie valeur de la variable indépendante a dépasse la plage maximale des valeurs représentées par des nombres à virgule flottante, alors le sélecteur sort directement la variable indépendante a et la fonction f.

10. Procédé pour exécuter multiples opérations de fonction transcendante appliquées à l'appareil selon la revendication 5, caractérisé en ce dans l'Étape 3, l'unité centrale met en œuvre les quatre types de transformation trigonométrique ou hyperbolique suivants par des opérations d'addition, de soustraction et de décalage sur trois nombres, c'est-à-dire, l'abscisse x, l'ordonnée y et l'angle z, dans lequel la transformation est effectuée en itérant pour approximer à l'angle de rotation qui devrait être effectué :

si l'angle de rotation $z_i$ dans une étape i est vers l'avant ou vers l'arrière est déterminé tel que ci-dessous: dans le mode par défaut, la cible z = 0, donc lorsque z> 0, la rotation vers l'avant est effectuée, et lorsque z <0, la rotation vers l'arrière est effectuée; dans le mode vectoriel, la cible y = 0, donc lorsque y> 0, la rotation vers l'arrière est effectuée, et lorsque y <0, la rotation vers l'avant est effectuée;

chaque itération équivaut à effectuer une rotation avant ou arrière d'angle $z_i$ et élargir l'abscisse et l'ordonnée par 1/cos $z_i$, dans lequel dans le mode hyperbolique, elles sont élargies par 1/cosh $z_i$:

Trigonométrique avant : $(x,y,z) \rightarrow ((x - y\tan z_i), (y + x\tan z_i), z - z_i)$
Trigonométrique arrière $(x,y,z) \rightarrow ((x + y\tan z_i), (y - x\tan z_i), z + z_i)$
Hyperbolique avant : $(x,y,z) \rightarrow ((x + y\tanh z_i), (y + x\tanh z_i), z - z_i)$
Hyperbolique arrière : $(x,y,z) \rightarrow ((x - y\tanh z_i), (y - x\tanh z_i), z + z_i)$

dans lequel pour mettre en œuvre chaque itération et convergence en utilisant des additions, soustractions et décalages seulement, les séquences suivantes devraient être adoptées pour $z_i$ :

Trigonométrique : $z_i = \arctan 2^{-i}$, $i$ = 0,1,2, ...
Hyperbolique : $z_i = \text{arctanh} 2^{-j}, j = i - k$, when$(3^{k+1} - 1)/2 + k \leq i \leq (3^{k+2} - 1)/2 + k + 1$, $i$ = 1,2,3, ...

dans lequel le nombre spécifique d'itérations, c'est-à-dire, la valeur maximale de i, est sélectionné de manière flexible basée sur la précision du nombre à virgule flottante traité, et après la sélection du nombre maximal d'itérations, les constantes susmentionnées peuvent être calculées:

$$A = \prod_{i=0}^{max} \frac{1}{\cos z_i}, B = \prod_{i=1}^{max} \frac{1}{\cosh z_i}$$

**11.** Procédé pour exécuter multiples opérations de fonction transcendante, le procédé comprenant :

un groupe d'unités de prétraitement transformant une variable indépendante entrée de manière externe a en coordonnées x, y, un angle z et d'autres informations k, et déterminant un mode d'opération à être utilisé par une unité centrale ;

l'unité centrale effectuant une transformation trigonométrique ou hyperbolique sur les coordonnées x, y et l'angle z, obtenant les coordonnées x', y' et l'angle z' transformés, et les sortant à un groupe d'unités de post-traitement; et

le groupe d'unités de post-traitement transformant les coordonnées x', y' et l'angle z' entrés par l'unité centrale selon les autres informations k et une fonction f entrée par le groupe d'unités de prétraitement pour obtenir un résultat de sortie c.

**12.** Procédé selon la revendication 11,
dans lequel le groupe d'unités de prétraitement comprend un sélecteur (1) et un processeur (2), et le groupe d'unités de post-traitement comprend une première unité de post-traitement (4), une deuxième unité de post-traitement (5) et une troisième unité de post-traitement (6),

le procédé comprenant en outre:
le sélecteur (1) recevant les variables indépendantes entrées de manière externe a et la fonction entrée de manière externe f, et déterminant laquelle des quatre opérations différentes devrait être prise.

**13.** Procédé selon la revendication 12, dans lequel les quatre opérations différentes sont :

I. si, selon une spécification adoptée pour les entrées ou sorties, une erreur entre un résultat de l'approximation linéaire ou quadratique de la variable indépendante a et une vraie valeur de celle-ci est limitée au dernier bit de mantisse dans un cas le résultat et la vraie valeur sont respectivement représentés par des nombres à virgule flottante, résultant en ce que la variable indépendante a est trop petite, alors le sélecteur (1) sort directement la variable indépendante a et la fonction f à la première unité de post-traitement (4) du groupe d'unités de post-traitement, et la première unité de post-traitement (4) obtient une formule d'approximation linéaire de la variable indépendante a basée sur la fonction f, et effectue des additions et des multiplications sur la variable indépendante a pour obtenir le résultat de sortie c;

II. si la variable indépendante a n'est pas au-delà d'un domaine de convergence de l'unité centrale (3); est capable d'atteindre l'angle z = 0 dans un mode par défaut ou une ordonnée y = 0 dans un mode vectoriel en un nombre limité d'étapes; et la variable indépendante a peut être directement acceptée par un mode correspondant de l'unité centrale (3), alors le sélecteur (1) obtient les coordonnées x, y et l'angle z de la variable indépendante a, et le mode à être utilisé par l'unité centrale (3) selon la fonction f, et sort les x, y, z et le mode à l'unité centrale (3); l'unité centrale (3) effectue une transformation trigonométrique ou hyperbolique sur les x, y et z basée sur le mode, obtient les coordonnées transformées x', y' et un angle transformé z', et les sort à la deuxième unité de post-traitement (5) dans le groupe d'unités de post-traitement; et la deuxième unité de post-traitement (5) obtient le résultat de sortie c basé sur les coordonnées x', y' et l'angle z' sortis par l'unité centrale (3) et la fonction f;

III. si la variable indépendante a ne peut pas être directement acceptée par un mode correspondant de l'unité centrale (3), alors le sélecteur (1) remet la variable indépendante a et la fonction f au processeur (2) pour prétraitement, et le processeur (2) effectue un traitement de décomposition d'information sur la variable indépendante a selon la fonction f, et obtient les coordonnées x, y, l'angle z, le mode à être utilisé par l'unité centrale (3), et l'autre information k, dans lequel les coordonnées x, y, l'angle z et le mode à être utilisé par l'unité centrale (3) sont les mêmes que ceux de II; les coordonnées x, y, l'angle z et le mode à être utilisé par l'unité centrale (3) sont sortis à l'unité centrale (3); et l'autre information k et la fonction f sont directement sorties à la troisième unité de post-traitement (6) dans le groupe d'unités de post-traitement; l'unité centrale (3) effectue une transformation trigonométrique ou hyperbolique sur les x, y et z basée sur le mode, obtient les x', y' et z', et les sort à la troisième unité de post-traitement (6) dans le groupe d'unités de post-traitement; et la troisième unité de post-traitement (6) obtient le résultat de sortie c basé sur les sorties x', y' et z' de l'unité centrale (3), le k donné par le processeur (2), et la fonction f; and

IV. si, selon une spécification adoptée pour les entrées ou sorties, une vraie valeur de la variable indépendante a dépasse une plage maximale des valeurs représentées par des nombres à virgule flottante, alors le sélecteur (1) sort directement la variable indépendante a et la fonction f.

14. Procédé selon la revendication 13, dans lequel selon la spécification adoptée pour les entrées ou sorties dans l'opération IV, la vraie valeur de la variable indépendante a dépasse la plage maximale des valeurs représentées par des nombres à virgule flottante, quant au nombre à virgule flottante de demi-précision IEEE754, la plage maximale est la valeur absolue maximale de (1024+1023) ou $1024 \times 2^{30-15} = 65504$.

15. Procédé selon l'une quelconque des revendications 11 à 14, le procédé comprenant :

Étape 1: le sélecteur recevant la variable indépendante d'entrée a et la fonction d'entrée f, et déterminant laquelle des quatre opérations différentes, à savoir I, II, III et IV, devrait être adoptée;

Étape 2: lorsque le processeur adopte l'opération III, le processeur effectuant une multiplication ou une transformation de décalage sur la variable indépendante d'entrée a et la fonction d'entrée f afin qu'elles puissent être acceptées par l'unité centrale, et enregistrant les informations de transformation k et un signe pour utilisation par la troisième unité de post-traitement, dans lequel le signe n'est valable seulement que dans une partie des fonctions;

Étape 3: lorsque le processeur adopte l'opération II ou III, l'unité centrale mettant en œuvre les quatre types de transformation trigonométrique ou hyperbolique suivants par des opérations d'addition, de soustraction et de décalage sur trois nombres, c'est-à-dire, l'abscisse x, l'ordonnée y et l'angle z:

Valeur par défaut trigonométrique : $(x,y,z) \rightarrow (A(xcosz - ysinz), A(ycosz + xsinz), 0)$,

Vecteur trigonométrique : $(x, y, 0) \rightarrow (A\sqrt{x^2 + y^2}, 0, arctan\frac{x}{y})$,

Valeur par défaut hyperbolique : $(x,y,z) \rightarrow (B(xcoshz + ysinhz), B(ycoshz + xsinhz), 0)$,

Vecteur hyperbolique : $(x, y, 0) \rightarrow (B\sqrt{x^2 - y^2}, 0, arctanh\frac{y}{x})$,

dans lequel dans les formules ci-dessus, A et B sont des constantes liées à un nombre sélectionné d'itérations, et l'opération de décalage consiste à multiplier par une puissance de 2;

Étape 4a: lorsque le processeur adopte l'opération I, la première unité de post-traitement calculant une approximation linéaire ou quadratique selon la fonction d'entrée f et sortant l'approximation; et

Étape 4b: lorsque le processeur adopte l'opération II ou III, la deuxième unité de post-traitement effectuant des opérations d'addition, de soustraction, de multiplication par une constante, de division et de décalage sur la sortie de l'unité centrale selon la fonction d'entrée f et l'information fournie par le processeur du groupe d'unités de prétraitement, et l'obtenant le résultat de sortie c, dans lequel l'information fournie par le processeur du groupe d'unités de prétraitement n'est valable seulement que dans l'opération III.

inputting a     inputting a
           function f

selector

processor    2

III

1

IV    I    II     III

pre-processing
unit group

core unit

3

III

II

first post-processing unit

second post-processing unit

third post-processing unit

4

5

6

post-processing unit group

outputting c(NaN)   outputting c       outputting c    outputting c

**FIG. 1**

FIG. 2

**FIG. 3**

| S1: The selector 1 accepts the input variable a and the input function f | | | |
|---|---|---|---|
| I: If a is too small, and a linear or quadratic approximation can meet the requirement for error | II: If a can be directly accepted by a corresponding mode of the core unit | III: If a cannot be directly accepted by a corresponding mode of the core unit | IV: If a is outside the definition domain of the function |

| S2: The processor 2 performs pre-processing | |
|---|---|
| I/II/III: Skips | III: Performs transformation such as multiplication and shift on the input so that it can be accepted by the core unit, and records the transformation information k and a sign |

| S3-0, S3-1, …, S3-n: The core unit implements one of the four trigonometric or hyperbolic transformations through addition, subtraction, and shift (by multiplying by a power of 2) on three numbers (the abscissa x, the ordinate y, and the angle z) | |
|---|---|
| I/IV: Skips | II/III: trigonometric default/trigonometric vector /hyperbolic default/hyperbolic vector (when the transformation is hyperbolic, i starts from 1) |

| S4: The post-processing unit transforms the output by the core unit (the abscissa x', the ordinate y', and the angle z') into a corresponding output (the operations vary depending on the functions) | | | |
|---|---|---|---|
| I: The first post-processing unit performs linear or quadratic approximation | II: The second post-processing unit performs addition, subtraction, etc. | III: The third post-processing unit performs addition, subtraction, multiplying by a constant, division, shift, etc. | IV: Outputs NaN |

**FIG. 4**

| | Situation I is selected | I: output from the first post-process ing | Situation II is selected | II: output (x, y, z) from the selector to the core unit | II/III: mode of the core unit |
|---|---|---|---|---|---|
| $\sin a$ | $\|a\| < 2^{-5}$ | $a$ | $\|a\| < 1.74327$ | 1/A,0,a | Trigonometric default |
| $\cos a$ | $\|a\| < 2^{-3}$ | $1 - \frac{a^2}{2}$ | $\|a\| < 1.74327$ | 1/A,0,a | Trigonometric default |
| $\tan a$ | $\|a\| < 2^{-5}$ | $a$ | $\|a\| < 1.74327$ | 1/A,0,a | Trigonometric default |
| $\tan^{-1} a$ | $\|a\| < 2^{-5}$ | $a$ | Any number other than A | 1,a,0 | Trigonometric vector |
| $\sinh a$ | $\|a\| < 2^{-5}$ | $a$ | $\|a\| < 1.11815$ | 1/B,0,a | Hyperbolic default |
| $\cosh a$ | $\|a\| < 2^{-3}$ | $1 + \frac{a^2}{2}$ | $\|a\| < 1.11815$ | 1/B,0,a | Hyperbolic default |
| $\tanh a$ | $\|a\| < 2^{-5}$ | $a$ | $\|a\| < 1.11815$ | 1/B,0,a | Hyperbolic default |
| $\tanh^{-1} a$ | $\|a\| < 2^{-5}$ | $a$ | $\|a\| < 0.80692$ | 1,a,0 | Hyperbolic vector |
| $e^{a}$ | $\|a\| < 2^{-5}$ | $1 + a + \frac{a^2}{2}$ | $\|a\| < 1.11815$ | 1/B,0,a | Hyperbolic default |
| $\ln a$ | None | - | $0.10686 < \|a\| < 9.35878$ | a+1,a-1,0 | Hyperbolic vector |
| $\sqrt{a}$ | None | - | $0.10686 < \|a\| < 9.35878$ | a+1,a-1,0 | Hyperbolic vector |

**Table 1**

| | Situation IV is selected | II: the second post-processing calculates a result c based on (x', y', and z') | III: the first half of the operation conducted when the processor of the pre-processing unit is needed (separating k is from b which is used in the second half of the operation) |
|---|---|---|---|
| $\sin a$ | None | sin a=y | $a = k\pi + b, k \text{ is an integer}, \lvert b \rvert < \frac{\pi}{2}$ |
| $\cos a$ | None | cos a=x | $a = k\pi + b, k \text{ is an integer}, \lvert b \rvert < \frac{\pi}{2}$ |
| $\tan a$ | None | tan a=y/x | $a = k\pi + b, k \text{ is an integer}, \lvert b \rvert < \frac{\pi}{2}$ |
| $\tan^{-1} a$ | None | arctan a=z | There is not such a situation |
| $\sinh a$ | $\lvert a \rvert < 11.7830$ | sinh a=y | $a = k\ln 2 + b, k \text{ is an integer}, 0 \le b < \ln 2$ |
| $\cosh a$ | $\lvert a \rvert < 11.7830$ | cosh a=x | $a = k\ln 2 + b, k \text{ is an integer}, 0 \le b < \ln 2$ |
| $\tanh a$ | $\lvert a \rvert < 11.7830$ | tanh a=y/x | $a = k\ln 2 + b, k \text{ is an integer}, 0 \le b < \ln 2$ |
| $\tanh^{-1} a$ | $\lvert a \rvert < 1$ | arctanh a=z | $k \text{ is an integer}, 2^{-2k-2} < 1 - \lvert a \rvert < 2^{-2k}$ |
| $e^{a}$ | $\lvert a \rvert < 11.0898$ | exp a=y+x | $a = k\ln 2 + b, k \text{ is an integer}, 0 \le b < \ln 2$ |
| $\ln a$ | a>0 | ln a=2z | $k \text{ is an integer}, a = 2^{k} b, 1 \le b < 4$ |
| $\sqrt{a}$ | a>0 | sqrt a=x/2B | $k \text{ is an even number}, a = 2^{k} b, 1 \le b$ |

**Table 1 (continued)**

| | III: the second half of the operation conducted by the processor of the pre-processing unit: b to the core unit (x, y, and z) | III: the third post-processing unit calculates c based on (x', y', and z') and k |
|---|---|---|
| $\sin a$ | 1/A,0,b | k is an even number: y. k is an odd number: -y |
| $\cos a$ | 1/A,0,b | k is an c: x. k is an odd number: -x |
| $\tan a$ | 1/A,0,b | y/x |
| $\tan^{-1} a$ | there is no such a situation | there is no such a situation |
| $\sinh a$ | 1/B,0,b | $2^{k-1}(x+y) - 2^{-k-1}(x-y)$ |
| $\cosh a$ | 1/B,0,b | $2^{k-1}(x+y) + 2^{-k-1}(x-y)$ |
| $\tanh a$ | 1/B,0,b | $\dfrac{2^{k-1}(x+y) - 2^{-k-1}(x-y)}{2^{k-1}(x+y) + 2^{-k-1}(x-y)}$ |
| $\tanh^{-1} a$ | $1 + a + 2^{2k}(1-a),$ $1 + a - 2^{2k}(1-a),0$ | z+kln2 |
| $e^{a}$ | 1/B,0,b | $2^{k}(x+y)$ |
| $\ln a$ | b+1,b-1,0 | 2z+kln2 |
| $\sqrt{a}$ | b+1,b-1,0 | $\dfrac{x}{2B} \cdot 2^{k/2}$ |

**Table 1 (continued)**